(19) Europäisches Patentamt
European Patent Office
Office européen des brevets

(11) **EP 3 333 236 B1**

(12) **EUROPÄISCHE PATENTSCHRIFT**

(45) Veröffentlichungstag und Bekanntmachung des Hinweises auf die Patenterteilung:
**31.03.2021  Patentblatt 2021/13**

(51) Int Cl.:
***C09J 7/38*** *(2018.01)*

(21) Anmeldenummer: **17182447.7**

(22) Anmeldetag: **20.07.2017**

(54) **HAFTKLEBESTREIFEN**

ADHESIVE STRIPS

BANDE ADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2016  DE 102016224646**
**12.12.2016  DE 102016224735**

(43) Veröffentlichungstag der Anmeldung:
**13.06.2018  Patentblatt 2018/24**

(73) Patentinhaber: **tesa SE**
**22848 Norderstedt (DE)**

(72) Erfinder:
• **Blazejewski, Anna**
  **22527 Hamburg (DE)**
• **Burmeister, Axel**
  **22527 Hamburg (DE)**
• **Petersen, Anika**
  **24598 Heidmühlen (DE)**

(74) Vertreter: **tesa SE**
**Hugo-Kirchberg-Straße 1**
**22848 Norderstedt (DE)**

(56) Entgegenhaltungen:
**WO-A1-2009/090119     WO-A1-2010/054944**

**Beschreibung**

Die Erfindung betrifft einen Haftklebestreifen.

Klebebänder werden häufig für die Verklebung von Kleinstbauteilen beispielsweise in Geräten in der Consumer-Elektronik-Industrie verwendet. Um dies zu ermöglichen, ist es erforderlich, dass die Form des Klebebandabschnittes der Form des Bauteils angepasst ist. Hierbei sind oft auch schwierige Geometrien nötig, welche durch Stanzen des Klebebandes erhalten werden. So sind Stegbreiten bei Stanzteilen von wenigen Millimetern oder sogar weniger keine Seltenheit. Bei der Applikation dieser empfindlichen Klebebänder auf die Bauteile kommt es häufig zur Verformung der Stanzteile.

Um die Verformung zu unterdrücken oder zumindest zu reduzieren, hat es sich als vorteilhaft herausgestellt, in die Klebebänder als mittlere Lage eine Folie, zum Beispiel eine PET-Folie, zu integrieren, um die Zugkräfte bei der Applikation aufzufangen.

Verklebungen mit solchen Klebebändern werden zunehmend auch verwendet, wenn das Bauteil Schockbelastungen ausgesetzt ist. Als besonders schockbeständig haben sich Verklebungen mit Haftklebestreifen herausgestellt, welche einen viskoelastischen, syntaktisch geschäumten Kern, eine stabilisierende Folie und auf den Außenlagen zwei selbstklebende Klebeschichten aufweisen.

Diese Haftklebestreifen sind derart leistungsfähig, dass unter Schockbelastung ein kohäsiver Bruch innerhalb des Haftklebestreifens zu beobachten ist. Die Verbindung zwischen dem geschäumten Kern und der stabilisierenden Folie versagt, und Schaum und Folie lösen sich voneinander.

Geschäumte Haftklebemassensysteme sind seit längerem bekannt und im Stand der Technik beschrieben.

Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und -wiedergabegeräte, wie beispielsweise Rundfunkgeräte und dergleichen

- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht heute zunehmend durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkerer Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund der unerwartet guten, nämlich nochmals verbesserten, Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Bluray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen.

Des Weiteren ist wichtig, dass die Klebebänder in ihrer Halteleistung nicht versagen, wenn das Mobilgerät, zum Beispiel ein Handy, fallengelassen wird und auf den Untergrund aufprallt. Der Klebestreifen muss also eine sehr hohe Schockresistenz aufweisen.

Die EP 2 832 780 A1 betrifft einen druckempfindlichen Klebeschaum, der ein Gummielastomer, mindestens einen Kohlenwasserstoff-Klebrigmacher und einen Vernetzer ausgewählt aus der Gruppe der multifunktionellen (Meth)Acrylatverbindungen enthält.

Die JP 2010/070,655 A betrifft eine Zusammensetzung, die ein Styrol-basiertes thermoplastisches Elastomer (A), einen Klebrigmacher (B) und wärmeexpandierbares mikrokapselartiges Schäumungsagenz enthält.

Die DE 10 2008 056 980 A1 betrifft eine Selbstklebemasse bestehend aus einem Gemisch enthaltend:

- einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpftem Dien im Elastomerblock enthält,
- mindestens ein Klebharz
- expandierte polymere Mikrokugeln.

Die WO 2009/090119 A1 betrifft eine druckempfindliche Klebemasse, die expandierte Mikroballons enthält, wobei die Klebkraft der die expandierten Mikroballons enthaltenden Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 % reduziert ist.

Die WO 2003/011954 A1 betrifft einen geschäumten Haftklebstoffgegenstand, wobei der Gegenstand a) ein Polymergemisch, enthaltend mindestens ein styrolisches Blockcopolymer und mindestens ein Polyarylenoxid, und b) ein oder mehrere schaumfähige Polymermikrokügelchen umfasst.

Die DE 10 2015 206 076 A1 betrifft einen Haftklebstreifen, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist, und gegebenenfalls aus einer oder mehreren Zwischenträgerschichten, dadurch gekennzeichnet, dass der Haftklebstreifen ausschließlich aus den genannten Klebemassenschichten und gegebenenfalls vorhandenen Zwischenträgerschichten besteht und die eine äußere obere und eine äußere untere Fläche des Haftklebstreifens von der oder den genannten Klebemassenschichten gebildet werden. Der wiederablösbare Haftklebstreifen zeichnet sich durch seine ausgeprägte Schockresistenz aus.

Die noch unveröffentlichte Patentanmeldung DE 10 2016 202 479 desselben Anmelders wie dieser Schrift beschreibt ein vierschichtiges Klebeband, bei dem eine geschäumte innenliegende Schicht zusätzlich durch eine PET-Stabilisierungsfolie verstärkt wird. Durch einen solchen Aufbau konnten besonders schockresistente Klebebänder angeboten werden.

Die ebenfalls noch unveröffentlichte Patentanmeldung DE 10 2016 209 707 desselben Anmelders wie dieser Schrift beschreibt einen Haftklebstreifen aus drei Schichten, umfassend eine innenliegende Schicht F aus einem nichtdehnbaren Folienträger, eine Schicht SK1 aus einer selbstklebenden Masse, die auf einer der Oberflächen der Folienträgerschicht F angeordnet ist und die auf einer geschäumten Acrylatmasse basiert, und eine Schicht SK2 aus einer selbstklebenden Masse, die auf der der Schicht SK1 gegenüberliegenden Oberfläche der Folienträgerschicht F angeordnet ist und die auf einer geschäumten Acrylatmasse basiert. Durch einen solchen Aufbau konnten ebenfalls besonders schockresistente Klebebänder angeboten werden.

Aufgabe der vorliegenden Erfindung gegenüber dem Stand der Technik ist es, einen Haftklebestreifen bereitzustellen, der bei einer hohen Verklebungsfestigkeit und einer hohen Schockresistenz eine verbesserte Wärmescherfestigkeit aufweist. An einer solchen Haftklebemasse besteht insbesondere Bedarf bei der Herstellung von Mobilgeräten, in denen Verklebungsverbünde mit hoher Schockresistenz realisiert werden sollen.

Die Aufgabe wird überraschenderweise mit einem gattungsgemäßen Haftklebestreifen erfindungsgemäß gelöst, wie er im Hauptanspruch niedergelegt ist. Gegenstand der Unteransprüche sind dabei vorteilhafte Ausführungsformen des Haftklebstreifens.

Demgemäß betrifft die Erfindung einen Haftklebestreifen, der zumindest eine Schicht SK1, vorzugsweise genau eine Schicht SK1, aus einer selbstklebenden Masse umfasst, die auf einer mit Mikroballons geschäumten Vinylaromatenblockcopolymer-Masse basiert, wobei der mittlere Durchmesser der von den Mikroballons gebildeten Hohlräume in der Selbstklebemasseschicht SK1 45 bis 110 $\mu$m beträgt, dadurch gekennzeichnet, dass die absolute Dichte der geschäumten Selbstklebemasseschicht SK1 500 bis 750 kg/m$^3$ beträgt.

Die erfindungsgemäßen Haftklebestreifen verfügen neben einer hohen Verklebungsfestigkeit und einer hohen Schockresistenz ferner über eine verbesserte Wärmescherfestigkeit. So zeigen sie im statischen Schertest bei erhöhten Temperaturen hohe Scherfestigkeiten und weisen ferner hohe Wärmebeständigkeiten auf, wie im SAFT-Versuch ("Shear Adhesion Failure Temperature") ersichtlich.

Es wurde überraschenderweise gefunden, dass sich in Selbstklebemasseschichten auf Basis einer mit Mikroballons geschäumten Vinylaromatenblockcopolymer-Masse verbesserte Wärmescherfestigkeiten erzielen lassen, indem die mittleren Durchmesser der von den Mikroballons gebildeten Hohlräume in den Selbstklebemasseschichten zu 45 bis 110 $\mu$m ausgewählt werden. Haftklebestreifen, die zumindest eine solche Schicht umfassen, weisen dementsprechend verbesserte Wärmescherfestigkeiten auf.

Vorzugsweise besteht der Haftklebestreifen aus einer einzigen Selbstklebemasseschicht SK1, so dass der Haftklebestreifen ein Einschichtsystem darstellt. Ein solches einschichtiges, beidseitig selbstklebendes Klebeband, d.h. doppelseitiges Klebeband, wird auch als "Transfertape" bezeichnet. Die Selbstklebemasseschicht des Transfertapes weist vorzugsweise eine Dicke auf von 45 bis 5000 μm auf, bevorzugter von 80 bis 2500 μm, noch bevorzugter von 100 μm bis 2000 μm, insbesondere von 100 bis 300 μm wie zum Beispiel 150 μm.

In einer weiteren bevorzugten Ausführungsform umfasst der Haftklebestreifen neben einer Schicht SK1 ferner eine Schicht F aus einem Folienträger, wobei die Schicht SK1 auf einer der Oberflächen der Folienträgerschicht F angeordnet ist. Ein solcher Haftklebestreifen stellt ein einseitiges Klebeband dar. Besonders bevorzugt besteht das einseitige Klebeband ausschließlich aus der Schicht SK1 und der Folienträgerschicht F.

Die Schicht F aus einem Folienträger wird im Rahmen dieser Schrift synonym auch einfach als Folienträger, Folienschicht oder als Folienträgerschicht bezeichnet.

In einer besonders bevorzugten Ausführungsform umfasst der Haftklebestreifen darüber hinaus eine Schicht SK2 aus einer selbstklebenden Masse auf Basis einer Vinylaromatenblockcopolymer-Masse, die auf der der Schicht SK1 gegenüber liegenden Oberfläche der Folienträgerschicht F angeordnet ist. Vorzugsweise basiert die Schicht SK2 auf einer, besonders bevorzugt mit Mikroballons, geschäumten Masse, wobei der mittlere Durchmesser der von den Mikroballons gebildeten Hohlräume in der Schicht SK2 insbesondere 45 bis 110 μm beträgt. Ein solcher Haftklebestreifen stellt ein doppelseitiges Klebeband dar. Insbesondere besteht das doppelseitige Klebeband ausschließlich aus den Schichten SK1, SK2 und der Folienträgerschicht F.

In der vorliegenden Anmeldung kann unter "Anordnung" der Schichten SK1 bzw. SK2 auf den Oberflächen der Folienträgerschicht eine solche Anordnung gemeint sein, bei der die Schichten SK1 und/oder SK2 in direktem Kontakt mit den Oberflächen der Folienträgerschicht stehen, d.h. direkt auf der Oberfläche angeordnet sind. Alternativ kann damit auch eine solche Anordnung gemeint sein, bei der zwischen der Schicht SK1 und der einen Oberfläche der Flächenträgerschicht F und/oder zwischen der Schicht SK2 und der der Schicht SK1 gegenüberliegenden Oberfläche der Folienträgerschicht F mindestens eine weitere Schicht vorliegt. Vorzugsweise stehen im erfindungsgemäßen Haftklebestreifen mit Folienträgerschicht F die Schichten SK1 und, sofern vorhanden, SK2 in direktem Kontakt mit einer der Oberflächen der Folienträgerschicht F bzw. mit der der Schicht SK1 gegenüberliegenden Oberfläche der Folienträgerschicht F

In erfindungsgemäße Haftklebestreifen mit mehr als einer Schicht aus einer selbstklebenden Masse handelt es sich vorzugsweise bei sämtlichen umfassten Selbstklebemasseschichten um Selbstklebemasseschichten, die auf einer mit Mikroballons geschäumten Vinylaromatenblockcopolymer-Masse basieren, wobei der mittlere Durchmesser der von den Mikroballons gebildeten Hohlräume in den Selbstklebemasseschichten jeweils 45 bis 110 μm beträgt. Derartige Haftklebestreifen weisen besonders hohe Wärmescherfestigkeiten auf.

Erfindungsgemäße doppelseitige Klebebänder mit Folienträger, in denen beide Selbstklebemasseschichten SK1 und SK2 derart mit Mikroballons geschäumt sind, dass der mittlere Durchmesser der von den Mikroballons gebildeten Hohlräume in beiden Selbstklebemasseschichten SK1 und SK2 jeweils 45 bis 110 μm beträgt, weisen dementsprechend besonders hohe Wärmescherfestigkeiten auf. Wenn im doppelseitigen Klebeband neben der Schicht SK1 ferner auch die Schicht SK2 geschäumt ist, führt dies außerdem zu einer erhöhten Schockresistenz des Klebebandes.

Die Schichten SK1 und SK2 aus selbstklebender Masse werden im Rahmen dieser Schrift auch als Selbstklebemasseschichten SK1 und SK2, einfach als Schichten SK1 und SK2 oder auch als außenliegende Schichten, Klebemassen- oder Haftklebemasseschichten SK1 und SK2 bezeichnet. Der Begriff "außenliegend" bezieht sich dabei auf den vorzugsweise dreischichtigen Aufbau des erfindungsgemäßen doppelseitigen Klebebandes aus dem Folienträger und den Schichten SK1 und SK2, unbeschadet eventuell vorgesehener Liner auf den Außenflächen der Selbstklebemasseschichten (siehe weiter unten).

In einem solchen einseitigen oder doppelseitigen Klebeband weist die Folienträgerschicht vorzugsweise eine Dicke zwischen 5 und 125 μm, bevorzugter zwischen 10 und 60 μm, noch bevorzugter zwischen 10 und 50 μm und besonders bevorzugt zwischen 10 und 40 μm auf. Ferner weist in einem solchen einseitigen oder doppelseitigen Klebeband die Selbstklebemasseschicht SK1 vorzugsweise eine Dicke von 45 bis 1000 μm, bevorzugter zwischen 45 und 200 μm und insbesondere von 60 bis 150 μm auf. Außerdem weist in einem solchen einseitigen oder doppelseitigen Klebeband die Selbstklebemasseschicht SK2, falls vorhanden, vorzugsweise eine Dicke von 20 bis 1000 μm, bevorzugter von 45 bis 1000 μm, noch bevorzugter zwischen 45 und 200 μm und insbesondere von 60 bis 150 μm auf. Der Haftklebestreifen in Form eines einseitigen Klebebandes weist vorzugsweise eine Dicke von 50 μm bis 1125 μm auf, bevorzugter von 100 bis 1000 μm, und insbesondere von 150 μm bis 300 μm. Der Haftklebestreifen in Form eines doppelseitigen Klebebandes mit Folienträger weist vorzugsweise eine Dicke von 70 μm bis 2125 μm auf, bevorzugter von 95 μm bis 2125 μm, noch bevorzugter von 100 bis 1000 μm, und insbesondere von 150 μm bis 300 μm.

Im doppelseitigen Klebeband mit Folienträger ist die Selbstklebemasseschicht SK 2 vorzugsweise mit Mikroballons geschäumt, wobei der mittlere Durchmesser der von den Mikroballons gebildeten Hohlräume in der Selbstklebemasseschicht SK2 bevorzugt 45 bis 110 μm beträgt. In einer besonders bevorzugten Ausführungsform des Haftklebestreifens weist dieser einen in Bezug auf die Zusammensetzung der Schichten symmetrischen Aufbau auf, indem die geschäumten Vinylaromatenblockcopolymer-Massen der beiden Selbstklebemasse-schichten SK1 und SK2 chemisch identisch sind und vorteilhaft auch, sofern ihnen Additive zugesetzt sind, diese identisch sind und in identischer Menge eingesetzt sind. Insbesondere ist der Haftklebestreifen vollkommen symmetrisch aufgebaut, das heißt sowohl bezüglich der chemischen Zusammensetzung der beiden geschäumten selbstklebenden Vinylaromatenblockcopolymermassenschichten SK1 und SK2 (einschließlich deren gegebenenfalls vorliegenden Additivierungen), als auch bezüglich seines strukturellen Aufbaus, indem beide Oberflächen des Folienträgers F identisch vorbehandelt sind und die beiden Selbstklebemasseschichten SK1 und SK2 dieselbe Dicke und Dichte aufweisen. "Vollkommen symmetrisch" bezieht sich dabei insbesondere auf die z-Richtung ("Dicke", Richtung senkrecht auf die Haftklebstreifenebene) des Haftklebestreifens, kann sich aber darüber hinaus natürlich auch auf die Geometrie in der Flächenebene (x- und y-Richtungen, also Länge und Breite, des Haftklebestreifens) beziehen.

Vorzugsweise weist das doppelseitige Klebeband mit Folienträger einen in z-Richtung strukturell symmetrischen Aufbau auf, indem die beiden Selbstklebemasseschichten SK1 und SK2 gleich dick sind und/oder dieselbe Dichte aufweisen. Erfindungsgemäß ist auch ein doppelseitiges Klebeband realisierbar, bei dem die Selbstklebemasseschichten SK1 und SK2 gleich dick sind und/oder dieselbe Dichte aufweisen, aber chemisch unterschiedlich sind.

Die äußeren der Verklebung zugänglichen Flächen des Haftklebstreifens werden vorzugsweise von, insbesondere mit Mikroballons, geschäumten Selbstklebemasseschichten gebildet, weil so die hohe Schockresistenz in der x,y-Ebene sowie insbesondere in der z-Ebene besonders gut verwirklicht werden kann. Von zentraler Bedeutung für die Schockresistenz sind dabei insbesondere die in den Selbstklebemasseschichten gebildeten Hohlräume.

Dementsprechend handelt es sich beim erfindungsgemäßen einseitigen Klebeband vorzugsweise um einen Haftklebestreifen bestehend aus der Folienträgerschicht F und der Selbstklebemasseschicht SK1, die auf einer der Oberflächen der Folienträgerschicht F angeordnet ist. Dort wird die äußere der Verklebung zugängliche Fläche des Haftklebstreifens von der erfindungsgemäß geschäumten Selbstklebemasseschicht SK1 gebildet.

Ebenso handelt es sich dementsprechend beim erfindungsgemäßen doppelseitigen Klebeband mit Folienträger vorzugsweise um einen Haftklebstreifen bestehend aus der Folienträgerschicht F, der Selbstklebemasseschicht SK1, die auf einer der Oberflächen der Folienträgerschicht F angeordnet ist, und der Selbstklebemasseschicht SK2, die auf der der Schicht SK1 gegenüber liegenden Oberfläche der Folienträgerschicht F angeordnet ist. Dort wird eine der beiden äußeren der Verklebung zugänglichen Flächen des Haftklebstreifens von der erfindungsgemäß geschäumten Selbstklebemasseschicht SK1 gebildet. Besonders bevorzugt basiert die Schicht SK2 auf einer mit Mikroballons geschäumten Vinylaromatenblockcopolymermasse, wobei der mittlere Durchmesser der von den Mikroballons gebildeten Hohlräume in der Selbstklebemasseschicht SK2 insbesondere 45 bis 110 $\mu$m beträgt.

Die nachfolgenden Ausführungen beziehen sich explizit ausnahmslos auch auf die vollkommen symmetrische Ausführungsvariante des erfindungsgemäßen doppelseitigen Klebebandes.

Die selbstklebenden Massen der Schichten SK1 und SK2 sind jeweils eine Haftklebemasse (PSA; englisch: "pressure sensitive adhesives"). Die Begriffe "selbstklebend" und "haftklebend" werden im Rahmen dieser Schrift insofern synonym verwendet.

Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist.

Gegebenenfalls kann es vorteilhaft sein, durch geeignete kohäsionssteigernde Maßnahmen, wie beispielsweise Vernetzungsreaktionen (Ausbildung brückenbildender Verknüpfungen zwischen den Makromolekülen), den Temperaturbereich, in dem eine Polymermasse haftklebrige Eigenschaften aufweist, zu vergrößern und/oder zu verschieben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Wenn in den nachfolgenden Ausführungen zu bevorzugten Ausführungsformen der Erfindung von einer "Selbstklebemasseschicht" bzw. "Selbstklebemasseschichten" oder einer "Vinylaromatenblockcopolymer-Masse" bzw. "Vinylaromatenblockcopolymer-Massen" gesprochen wird, so kann sich dies auf die Schicht SK1, auf die Schicht SK2 oder aber auf beide Schichten beziehen, wenn nicht ausdrücklich anders angegeben.

## Erfindungsgemäß einsetzbare Selbstklebemasseschichten

Die Schicht SK1 der erfindungsgemäßen Haftklebestreifen basiert auf einer mit Mikroballons geschäumten Vinylaromatenblockcopolymer-Masse. Die Schicht SK2 des erfindungsgemäßen Haftklebestreifens in Form eines doppelseitigen Klebebandes mit Folienträger basiert ebenfalls auf einer Vinylaromatenblockcopolymer-Masse, ggf. auf einer mit Mikroballons geschäumten Vinylaromatenblockcopolymer-Masse.

### (a) Selbstklebemasseschichten auf Basis einer Vinylaromatenblockcopolymer-Masse

Vorzugsweise wird in der Schicht SK1 und/oder in der Schicht SK2 als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$ eingesetzt, worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl $\geq 2$ stehen.

Besonders bevorzugt sind alle Synthesekautschuke der erfindungsgemäßen Selbstklebemasseschicht Blockcopolymere mit einem Aufbau A-B, A-B-A, $(A-B)_n$, $(A-B)_nX$ oder $(A-B-A)_nX$ wie vorstehend dargelegt. Die erfindungsgemäße Selbstklebemasseschicht kann somit auch Gemische verschiedener Blockcopolymere mit einem Aufbau wie vorstehend beschrieben enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Selbstklebemasseschicht ein Blockcopolymer mit einem Aufbau A-B, A-B-A, $(A-B)_2X$, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Selbstklebemasseschicht Blockcopolymere mit einem Aufbau A-B, A-B-A, $(A-B)_2X$, $(A-B)_3X$ oder $(A-B)_4X$, wobei für A, B und X die vorstehenden Bedeutungen gelten. Insbesondere ist der Synthesekautschuk der erfindungsgemäßen Selbstklebemassenschicht ein Gemisch aus Blockcopolymeren mit einem Aufbau A-B, A-B-A, $(A-B)_2X$, $(A-B)_3X$ oder $(A-B)_4X$, das bevorzugt mindestens Diblockcopolymere A-B und/oder Triblockcopolymere A-B-A und/oder $(A-B)_2X$ enthält.

Weiterhin vorteilhaft ist ein Gemisch aus Diblock- und Triblockcopolymeren und $(A-B)_n$- oder $(A-B)_nX$-Blockcopolymeren mit n größer gleich 3.

Weiterhin vorteilhaft ist ein Gemisch aus Diblock- und Multiblockcopolymeren und $(A-B)_n$- oder $(A-B)_nX$-Blockcopolymeren mit n größer gleich 3.

Als Vinylaromatenblockcopolymere können somit beispielsweise Diblockcopolymere A-B in Kombination mit anderen der genannten Blockcopolymere genutzt werden. Über den Anteil an Diblockcopolymeren können das Auffließverhalten der Selbstklebemassen und deren Verklebungsfestigkeit eingestellt werden. Erfindungsgemäß eingesetztes Vinylaromatenblockcopolymer weist vorzugsweise einen Diblockcopolymeranteil von 0 Gew.-% bis 70 Gew.-% und bevorzugter von 15 Gew.-% bis 50 Gew.-% auf. Ein höherer Anteil an Diblockcopolymer im Vinylaromatenblockcopolymer führt zu einer deutlichen Reduktion an Kohäsion der Klebemasse.

Als Selbstklebemassen finden bevorzugt solche auf Basis von Blockcopolymeren enthaltend Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, Anwendung.

Besonders bevorzugt basieren erfindungsgemäße Selbstklebemassen auf Styrolblockcopolymeren, beispielsweise besitzen die Blockcopolymere der Selbstklebemassen Polystyrolendblöcke. Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können AB-Zweiblockcopolymere vorhanden sein. Sämtliche der vorgenannten Polymere können allein oder im Gemisch miteinander genutzt werden.

In einem erfindungsgemäß eingesetzten Vinylaromatenblockcopolymer, wie insbesondere einem Styrolblockcopolymer, beträgt der Anteil an Polyvinylaromaten, wie insbesondere Polystyrol, vorzugsweise mindestens 12 Gew.-%, bevorzugter mindestens 18 Gew.-% und besonders bevorzugt mindestens 25 Gew.-% und ebenso vorzugsweise höchstens 45 Gew.-% und bevorzugter höchstens 35 Gew. -%.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vorzugsweise umfassen dabei die Vinylaromaten zum Aufbau des Blocks A Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien, oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wider.

Der Anteil der Vinylaromatenblockcopolymere, wie insbesondere Styrolblockcopolymere, beträgt vorzugsweise in Summe bezogen auf die gesamte Selbstklebemasseschicht mindestens 20 Gew.-%, vorzugsweise mindestens 30 Gew.-%, weiter bevorzugt mindestens 35 Gew.-%. Ein zu geringer Anteil an Vinylaromatenblockcopolymeren hat zur Folge, dass die Kohäsion der Haftklebemasse relativ niedrig ist.

Der maximale Anteil der Vinylaromatenblockcopolymere, wie insbesondere Styrolblockcopolymere, in Summe bezogen auf die gesamte Selbstklebemasse beträgt maximal 75 Gew.-%, bevorzugt maximal 65 Gew.-%, ganz besonders bevorzugt maximal 55 Gew.-%. Ein zu hoher Anteil an Vinylaromatenblockcopolymeren hat wiederum zur Folge, dass die Haftklebemasse kaum noch haftklebrig ist.

Dementsprechend beträgt vorzugsweise der Anteil der Vinylaromatenblockcopolymere, wie insbesondere Styrolblockcopolymere, in Summe bezogen auf die gesamte Selbstklebemasse mindestens 20 Gew.-%, bevorzugter mindestens 30 Gew.-%, weiter bevorzugt mindestens 35 Gew.-% und gleichzeitig maximal 75 Gew.-%, bevorzugter maximal 65 Gew.-%, ganz besonders bevorzugt maximal 55 Gew.-%.

Die Haftklebrigkeit der Selbstklebemassen kann durch Zugabe von mit der Elastomerphase mischbaren Klebharzen erreicht werden. Die Selbstklebemassen weisen in der Regel neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

Falls in den Selbstklebemassen Klebharz enthalten ist, wird entsprechend zu mindestens 75 Gew.-% (bezogen auf den Gesamtharzanteil) ein Harz gewählt mit einem DACP (diacetone alcohol cloud point) von größer 0 °C, bevorzugt größer 10 °C, und einer Erweichungstemperatur (Ring & Ball) von größer gleich 70 °C, vorzugsweise größer gleich 100 °C. Besonders bevorzugt weist das genannte Klebharz gleichzeitig einen DACP-Wert von maximal 45 °C auf, sofern keine Isoprenblöcke in der Elastomerphase vorliegen, oder von maximal 60 °C auf, sofern Isoprenblöcke in der Elastomephase vorliegen. Besonders bevorzugt beträgt die Erweichungstemperatur des genannten Klebharzes maximal 150 °C.

Besonders bevorzugt handelt es sich bei den Klebharzen zu mindestens 75 Gew.-% (bezogen auf den Gesamtharzanteil) um Kohlenwasserstoffharze oder Terpenharze oder eine Mischung dergleichen.

Es wurde gefunden, dass als Klebrigmacher für die Haftklebemasse(n) insbesondere unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 25 % bezogen auf die Gesamtmasse der Harze in der Klebemasse eingesetzt werden, so zum Beispiel Kolophonium- und/oder Kolophoniumesterharze und/oder Terpenphenolharze.

Der Anteil der bei Raumtemperatur optional einsetzbaren flüssigen Harze bzw. Weichmacher beträgt gemäß einer bevorzugten Variante bis zu 15 Gew.-%, vorzugsweise bis zu 10 Gew.-% bezogen auf die gesamte Selbstklebemasse.

In einer bevorzugten Ausführungsform sind in den Selbstklebemasseschichten 20 bis 60 Gew.-% mindestens eines Klebharzes, bezogen auf das Gesamtgewicht der Selbstklebemasseschicht, bevorzugt 30 bis 50 Gew.-% mindestens eines Klebharzes, bezogen auf das Gesamtgewicht der Selbstklebemasseschicht, enthalten.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene,
  vorzugsweise mit einem Anteil von 0,2 bis 5 Gew.-% bezogen auf das Gesamtgewicht der Selbstklebemasse
- primäre Antioxidantien wie zum Beispiel sterisch gehinderte Phenole,
  vorzugsweise mit einem Anteil von 0,2 bis 1 Gew.-% bezogen auf das Gesamtgewicht der Selbstklebemasse
- sekundäre Antioxidantien, wie zum Beispiel Phosphite, Thioester oder Thioether,
  vorzugsweise mit einem Anteil von 0,2 bis 1 Gew.-% bezogen auf das Gesamtgewicht der Selbstklebemasse
- Prozessstabilisatoren wie zum Beispiel C-Radikalfänger,
  vorzugsweise mit einem Anteil von 0,2 bis 1 Gew.-% bezogen auf das Gesamtgewicht der Selbstklebemasse
- Lichtschutzmittel wie zum Beispiel UV-Absorber oder sterisch gehinderte Amine,
  vorzugsweise mit einem Anteil von 0,2 bis 1 Gew.-% bezogen auf das Gesamtgewicht der Selbstklebemasse
- Verarbeitungshilfsmittel,
  vorzugsweise mit einem Anteil von 0,2 bis 1 Gew.-% bezogen auf das Gesamtgewicht der Selbstklebemasse
- Endblockverstärkerharze,
  vorzugsweise mit einem Anteil von 0,2 bis 10 Gew.-% bezogen auf das Gesamtgewicht der Selbstklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,
  vorzugsweise mit einem Anteil von 0,2 bis 10 Gew.-% bezogen auf das Gesamtgewicht der Selbstklebemasse.

Die Art und Menge der Abmischkomponenten kann bedarfsweise ausgewählt werden. Erfindungsgemäß ist es auch, wenn die Klebemasse einige, vorzugsweise alle der genannten Zuschlagstoffe jeweils nicht aufweist.

In einer Ausführungsform der vorliegenden Erfindung enthält die Selbstklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein.

Als Weichmacher können zum Beispiel Mineralöle, (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Selbstklebemasse noch weiter zu steigern.

Gemäß einer bevorzugten Ausführungsform der Erfindung besteht die Klebemasse nur aus Vinylaromatenblockcopolymeren, Klebharzen, Mikroballons und gegebenenfalls den oben erwähnten Additiven.

Weiter vorzugsweise besteht die Klebemasse aus folgender Zusammensetzung:

| | |
|---|---|
| • Vinylaromatenblockcopolymere | 20 bis 75 Gew.-% |
| • Klebharze | 24,6 bis 60 Gew.-% |
| • Mikroballons | 0,2 bis 10 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 30 bis 75 Gew.-% |
| • Klebharze | 24,8 bis 60 Gew.-% |
| • Mikroballons | 0,2 bis 10 Gew.-% |

Die erfindungsgemäße Selbstklebemasse SK1 ist geschäumt, und auch die erfindungsgemäße Selbstklebemasse SK2 ist vorzugsweise geschäumt. Bevorzugt erfolgt die Schäumung jeweils durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel® DU-Typen (DU = dry unexpanded) von der Firma Akzo Nobel. In der Typenbezeichnung Expancel xxx DU yy (Dry unexpended) steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Selbstklebemasse geeignet.

Eine geschäumte erfindungsgemäße Selbstklebemasse SK1 und/oder SK2 kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich. "xxx" steht für die Zusammensetzung der Mikroballonabmischung, "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Schicht SK1 oder der Schicht SK2 oder bevorzugt beider Schichten SK1 und SK2 eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6 liegt. Erst nach oder unmittelbar bei der Einarbeitung erfolgt dann die Expansion. Bei lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß beträgt der mittlere Durchmesser der von den Mikroballons gebildeten Hohlräume in der geschäumten Selbstklebemasseschicht SK1 45 bis 110 $\mu$m, und auch eine mit Mikroballons geschäumte Selbstklebemasseschicht SK2 weist vorzugsweise Hohlräume auf, deren mittlerer Durchmesser im Bereich von 45 bis 110 $\mu$m liegt.

Bevorzugt beträgt der mittlere Durchmesser der von den Mikroballons gebildeten Hohlräume in der geschäumten Selbstklebemasseschicht SK1 und/oder SK2 60 bis 100 $\mu$m, besonders bevorzugt 70 bis 90 $\mu$m, wie zum Beispiel 80 $\mu$m. In diesen Bereichen lassen sich besonders gute Wärmescherfestigkeiten erzielen. Haftklebestreifen, die derartige Selbstklebemasseschichten umfassen, sind dementsprechend durch hervorragende Wärmescherfestigkeiten gekennzeichnet.

Da hierbei die Durchmesser der von den Mikroballons gebildeten Hohlräume in den geschäumten Selbstklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der jeweiligen Selbstklebemasseschicht SK1 oder SK2 gemeint.

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Selbstklebemasseschicht SK1 und/oder der Selbstklebemasseschicht SK2, falls letztere mit Mikroballons geschäumt ist, liegt gemäß einer bevorzugten Ausführungsform der Erfindung bei bis zu 12 Gew.-%, vorzugsweise zwischen 0,25 Gew.-% und 5 Gew.-%, bevorzugter zwischen 0,5 und 4 Gew.-%, noch bevorzugter zwischen 1 und 3,5 Gew.-%, und insbesondere bei 2,0 bis 3,0 Gew.-%, jeweils bezogen auf die Gesamtzusammensetzung der Selbstklebemasseschicht. In diesen Bereichen lassen sich Selbstklebemasseschichten bereitstellen, die neben besonders guten Schockresistenzen insbesondere hervorragende Wärmescherfestigkeiten aufweisen. Haftklebestreifen, die derartige Selbstklebemasseschicht umfassen, sind somit neben besonders guten Schockresistenzen insbesondere durch hervorragende Wärmescherfestigkeiten gekennzeichnet.

Eine erfindungsgemäße expandierbare Mikrohohlkugeln enthaltende Selbstklebemasse SK1 oder SK2 darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nichtthermoplastischem Glas.

Geeignet für die erfindungsgemäße Selbstklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Selbstklebemasseschicht SK1 und/oder SK2 beträgt vorzugsweise 400 bis 990 kg/m$^3$, bevorzugter 450 bis 900 kg/m$^3$, noch bevorzugter 500 bis 800 kg/m$^3$ und insbesondere 500 bis 750 kg/m$^3$, wie zum Beispiel 600 bis 700 kg/m$^3$.

In diesen Bereichen lassen sich Selbstklebemasseschichten bereitstellen, die neben sehr guten Schockresistenzen insbesondere über hervorragende Wärmescherfestigkeiten verfügen. Entsprechendes gilt für die erfindungsgemäßen Haftklebestreifen, die Selbstklebemasseschichten mit derartigen absoluten Dichten umfassen.

Die relative Dichte beschreibt das Verhältnis der Dichte der geschäumten erfindungsgemäßen Selbstklebemasse zur Dichte der rezepturidentischen, ungeschäumten erfindungsgemäßen Selbstklebemasse. Die relative Dichte einer erfindungsgemäßen Selbstklebemasse beträgt vorzugsweise 0,35 bis 0,99, stärker bevorzugt 0,45 bis 0,97, insbesondere 0,50 bis 0,90.

### Folienträger

Bei dem in einem erfindungsgemäßen Haftklebestreifen optional enthaltenen Folienträger F kann es sich um einen nichtdehnbaren Folienträger oder um einen dehnbaren Folienträger handeln.

Unter einem "nichtdehnbaren Folienträger" ist erfindungsgemäß ein Folienträger gemeint, der, bevorzugt sowohl in der Längsrichtung als auch in der Querrichtung, eine Reißdehnung von weniger als 300% aufweist. Der nichtdehnbare Folienträger weist außerdem, bevorzugt unabhängig voneinander sowohl in der Längsrichtung als auch in der Querrichtung, vorzugsweise eine Reißdehnung von weniger als 200 %, bevorzugter von weniger als 150 %, noch bevorzugter von weniger als 100 %, und insbesondere von weniger als 70 %, wie zum Beispiel von weniger als 50%, auf. Die angegebenen Werte beziehen sich jeweils auf die weiter hinten angegebene Messmethode R1.

Unter einem "dehnbaren Folienträger" ist erfindungsgemäß ein Folienträger gemeint, der, bevorzugt sowohl in der Längsrichtung als auch in der Querrichtung, eine Reißdehnung von mindestens 300% aufweist. Der dehnbare Folienträger weist außerdem, bevorzugt unabhängig voneinander sowohl in der Längsrichtung als auch in der Querrichtung, eine Reißdehnung von mindestens 500% auf, wie zum Beispiel von mindestens 800%. Die angegebenen Werte beziehen sich jeweils auf die weiter hinten angegebene Messmethode R1.

Die Dicke der Folienträgerschicht liegt gemäß einer bevorzugten Ausführungsform zwischen 5 und 125 $\mu$m, bevorzugter zwischen 10 und 60 $\mu$m, noch bevorzugter zwischen 10 und 50 $\mu$m und besonders bevorzugt zwischen 10 und 40 $\mu$m.

Zur Herstellung des Folienträgers werden filmbildende oder extrusionsfähige Polymere eingesetzt, die zusätzlich mono- oder biaxial orientiert sein können.

Die Folienträger können einschichtig oder mehrschichtig sein, vorzugsweise sind sie einschichtig. Des Weiteren können die Folienträger Deckschichten aufweisen, beispielsweise Sperrschichten, die ein Eindringen von Komponenten aus der Klebemasse in die Folie oder umgekehrt unterbinden. Diese Deckschichten können auch Barriereeigenschaften haben, um so ein Durchdiffundieren von Wasserdampf und/oder Sauerstoff zu verhindern.

Die Rückseite der Folienträger kann einer antiadhäsiven physikalischen Behandlung oder Beschichtung unterzogen sein.

Zur Herstellung eines Folienträgers kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Durch den Einsatz eines nichtdehnbaren Folienträgers im erfindungsgemäßen Haftklebestreifen wird die Verarbeitbarkeit des resultierenden Haftklebestreifens erleichtert, insbesondere lassen sich die Stanzprozesse erleichtern. Ferner kann die Verwendung eines nichtdehnbaren Folienträgers, beispielsweise aus Polyethylenterephthalat (PET), im erfindungsgemäßen Haftklebestreifen gegenüber der Verwendung eines dehnbaren Folienträgers zu einer verbesserten Schockresistenz führen. Die Schockresistenz des erfindungsgemäßen Haftklebestreifens lässt sich nicht lediglich durch die geschäumte(n) Selbstklebemasse(n), sondern überraschenderweise auch durch die Art des verwendeten Folienträgers und dessen Dicke beeinflussen.

Als Materialien für die Folie des nichtdehnbaren Folienträgers F werden bevorzugt Polyester, insbesondere Polyethylenterephthalat (PET), Polyamid (PA), Polyimid (PI) oder mono- oder biaxial verstrecktes Polypropylen (PP) verwendet. Ebenfalls möglich ist auch die Verwendung von mehrschichtigen Laminaten oder Coextrudaten, insbesondere aus den vorgenannten Materialien. Vorzugsweise ist der nichtdehnbare Folienträger einschichtig.

Besonders bevorzugt besteht der nichtdehnbare Folienträger aus Polyethylenterephthalat und weist eine Dicke zwischen 10 und 50 $\mu$m auf.

In vorteilhafter Vorgehensweise sind eine oder beide Oberflächen der nichtdehnbaren Folienträgerschicht F physikalisch und/oder chemisch vorbehandelt. Eine solche Vorbehandlung kann beispielweise durch Ätzung und/oder Coronabehandlung und/oder Plasmavorbehandlung und/oder Primerung erfolgen, vorzugsweise durch Ätzung. Sofern beide Oberflächen der Folienschicht vorbehandelt sind, kann die Vorbehandlung jeder Oberfläche unterschiedlich erfolgen oder insbesondere können beide Oberflächen gleich vorbehandelt sein.

Um sehr gute Ergebnisse für die Aufrauhung zu erzielen, ist es zu empfehlen, als Reagenz zum Ätzen der Folie Trichloressigsäure (Cl$_3$C-COOH) oder Trichloressigsäure in Kombination mit inerten pulverförmigen Verbindungen, bevorzugt Siliziumverbindungen, besonders bevorzugt [SiO$_2$]$_x$, einzusetzen. Sinn der inerten Verbindungen ist, in die Oberfläche der Folie, insbesondere der PET-Folie, eingebaut zu werden, um auf diese Weise die Rauigkeit und die Oberflächenenergie zu verstärken.

Die Coronabehandlung ist ein chemisch-thermisches Verfahren zur Steigerung der Oberflächenspannung/Oberflächenenergie von polymeren Substraten. Zwischen zwei Elektroden werden in einer Hochspannungsentladung Elektronen stark beschleunigt, was zu einer Ionisierung der Luft führt. Wird ein Kunststoffsubstrat in die Bahn dieser beschleunigten Elektroden eingebracht, so schlagen die so erzeugten beschleunigten Elektroden mit 2 - 3-facher Energie auf die Substratoberfläche auf, wie sie notwendig wäre, um die molekularen Bindungen der meisten Substrate oberflächlich aufzubrechen. Dies führt zur Entstehung von gasförmigen Reaktionsprodukten und hoch reaktiven, freien Radikalen. Diese freien Radikale können in der Gegenwart von Sauerstoff und den Reaktionsprodukten rasch reagieren und bilden verschiedene chemische Funktionsgruppen auf der Substratoberfläche. Funktionsgruppen, die sich aus diesen Oxidationsreaktionen ergeben, tragen am stärksten dazu bei, die Oberflächenenergie zu steigern. Die Coronabehandlung kann mit Zweielektroden-, aber auch mit Einelektroden-Anlagen erfolgen. Während der Coronavorbehandlung können (neben üblicher Luft) unterschiedliche Prozessgase wie Stickstoff zum Einsatz kommen, die eine Schutzgasatmosphäre ausbilden beziehungsweise die Coronavorbehandlung unterstützen.

Die Plasma-Behandlung - insbesondere Niederdruck-Plasmabehandlung - ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an. Haftvermittelnde Primer, oft auch Haftvermittler oder Adhesion Promoter genannt, sind vielfach in Form von kommerziellen Produkten oder aus der technischen Literatur bekannt.

Ein geeigneter nichtdehnbarer Folienträger ist unter der Handelsbezeichnung Hostaphan ® RNK erhältlich. Diese Folie ist hochtransparent, biaxial orientiert und besteht aus drei coextrudierten Schichten.

Die Zugfestigkeit eines nichtdehnbaren Folienträgers liegt erfindungsgemäß bevorzugt bei größer 100 N/mm$^2$, bevorzugter bei größer 150 N/mm$^2$, noch bevorzugter bei größer 180 N/mm$^2$ und insbesondere bei größer 200 N/mm$^2$, wie zum Beispiel bei größer 250 N/mm$^2$, in Längsrichtung und bevorzugt bei größer 100 N/mm$^2$, bevorzugter bei größer 150 N/mm$^2$, noch bevorzugter bei größer 180 N/mm$^2$, und insbesondere bei größer 200 N/mm$^2$, wie zum Beispiel bei größer 250 N/mm$^2$, in Querrichtung (angegebene Werte jeweils in Bezug auf die weiter hinten angegebene Messmethode R1). Der Folienträger bestimmt maßgeblich die Zugfestigkeit des Haftklebestreifens. Vorzugsweise weist der Haftklebestreifen die gleichen Werte für die Zugfestigkeit auf wie der eingesetzte Folienträger.

Der Elastizitätsmodul des nichtdehnbaren Folienträgers liegt vorzugsweise bei mehr als 0,5 GPa, bevorzugter bei mehr als 1 GPa und insbesondere bei mehr als 2,5 GPa, bevorzugt sowohl in der Längsrichtung, als auch in der Querrichtung.

Wird im erfindungsgemäßen Haftklebestreifen ein dehnbarer Folienträger eingesetzt, so reicht die Dehnbarkeit des Folienträgers vorzugsweise aus, um ein rückstands- und zerstörungsfreies Ablösen des Haftklebstreifens durch dehnendes Verstrecken im Wesentlichen in der Verklebungsebene zu gewährleisten. Als Zwischenträger können zum Beispiel sehr dehnfähige Folien dienen. Beispiele für vorteilhaft einsetzbare dehnbare Zwischenträger sind Ausführungen aus WO 2011/124782 A1, DE 10 2012 223 670 A1, WO 2009/114683 A1, WO 2010/077541 A1, WO 2010/078396 A1.

In einer bevorzugten Ausführungsform eines dehnbaren Folienträgers werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Ferner lassen sich Polyurethane vorteilhaft als Ausgangsmaterialien für dehnbare Folienträger verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Dem Fachmann sind weitere Rohstoffe bekannt, aus denen erfindungsgemäße dehnbare Folienträger aufgebaut werden können. Weiterhin ist es vorteilhaft, Kautschuk basierende Materialien in dehnbaren Folienträgern einzusetzen, um Dehnbarkeit zu realisieren. Als Kautschuk oder Synthesekautschuk oder daraus erzeugten Verschnitten als Ausgangsmaterial für dehnbare Folienträger kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Folienträger sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyetherwie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[a]-Methylstyrol, Polyalkylvinylether, Polyvinylacetat, Polymerblöcke $[\alpha],[\beta]$-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Des Weiteren sind als dehnbare Folienträger bahnförmige Schaumstoffe (beispielsweise aus Polyethylen und Polyurethan) denkbar, aber nicht bevorzugt im Sinne der vorliegenden Erfindung.

Zur besseren Verankerung der Selbstklebemassen auf den dehnbaren Folienträgern können die Folienträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Besonders vorteilhaft handelt es sich bei dem dehnbaren Folienträger um einen einschichtigen Folienträger, vorzugsweise aus Polyurethan, wobei der Träger eine Reißdehnung von mindestens 300 % aufweist, vorzugsweise mindestens 500%, insbesondere mindestens 800%, und gegebenenfalls ein Rückstellvermögen von über 50 % aufweist. Bevorzugt weist der Folienträger die angegebenen Reißdehnungswerte und/oder das angegebene Rückstellvermögen dabei sowohl in der Längsrichtung, als auch in der Querrichtung auf.

Bevorzugt wird die Zugfestigkeit des dehnbaren Trägermaterials so eingestellt, dass sich der Haftklebestreifen durch dehnende Verstreckung aus einem Klebeverbund zerstörungsfrei wieder ablösen lässt.

## Herstellung und Ausgestaltung des Haftklebestreifens

Die Herstellung und Verarbeitung der erfindungsgemäß einsetzbaren Selbstklebemassen SK1 bzw. SK2 kann sowohl aus der Lösung, als auch aus der Schmelze erfolgen. Das Aufbringen der erfindungsgemäß einsetzbaren Selbstklebemassen SK1 bzw. SK2 auf Folienträgerschichten kann durch direkte Beschichtung oder durch Laminierung, insbesondere Heißlaminierung erfolgen.

Vorteilhaft können die äußeren, frei liegenden Flächen der außenliegenden Klebemassenschichten der erfindungsgemäßen Haftklebebstreifen mit beidseitig antiadhäsiv beschichteten Materialien ausgerüstet sein wie ein Trennpapier oder eine Trennfolie, auch Liner genannt, und zwar als temporärer Träger. Ein Liner (Trennpapier, Trennfolie) ist nicht Bestandteil eines Haftklebestreifens, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Typische Konfektionierformen der erfindungsgemäßen Haftklebestreifen sind Klebebandrollen sowie Klebestreifen, wie sie zum Beispiel in Form von Stanzlingen erhalten werden.
Vorzugsweise weisen alle Schichten im Wesentlichen die Form eines Quaders auf. Weiter vorzugsweise sind alle Schichten vollflächig miteinander verbunden. Diese Verbindung kann durch die Vorbehandlung der Folienoberflächen optimiert werden.

Der allgemeine Ausdruck "Klebestreifen" (Haftklebesteifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Der Haftklebestreifen weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Der erfindungsgemäße Haftklebestreifen liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist.

Die Verwendung eines nichtdehnbaren Folienträgers im erfindungsgemäßen Haftklebestreifen führt zu einer vorteilhaften Handhabbarkeit des Haftklebestreifens, insbesondere auch von filigranen Stanzlingen. Der im erfindungsgemäßen Haftklebestreifen einsetzbare nichtdehnbare Folienträger führt in den Stanzlingen zu ausgeprägter Steifheit, so dass der Stanzprozess und das Platzieren der Stanzlinge vereinfacht werden. Ein aus einem erfindungsgemäßen Haftklebestreifen mit nichtdehnbarem Folienträger gebildeter Stanzling kann insbesondere eine äußere Stanzkante und eine innere Ausnehmung ausweisen, so dass er rahmenförmig vorliegt. Dabei können einzelne Stege eine Breite von weniger als 5 mm oder von weniger als 2,5 mm oder sogar von weniger als 1 mm aufweisen.

Die Verwendung eines dehnbaren Folienträgers im erfindungsgemäßen Haftklebestreifen erlaubt andere vorteilhaft Produktausgestaltungen. Es werden Haftklebestreifen zugänglich, die sich durch dehnende Verstreckung zerstörungsfrei aus einer Verklebung herauslösen lassen.

Der Haftklebestreifen, insbesondere in Bahnform, kann in Form einer Rolle, also in Form einer archimedischen Spirale auf sich selbst aufgerollt, hergestellt werden.

## Eigenschaften der erfindungsgemäßen Haftklebestreifen

Die erfindungsgemäßen Haftklebestreifen zeichnen sich durch ein hervorragendes Anwendungsprofil, d.h. durch sehr gute anwendungs- und klebtechnische Eigenschaften aus.

Insbesondere wird die erfindungsgemäß gestellte Aufgabe gelöst. So hat sich herausgestellt, dass die erfindungsgemäßen Haftklebestreifen neben einer hohen Verklebungsfestigkeit und einer hohen Schockresistenz ferner über eine verbesserte Wärmescherfestigkeit verfügen.

So zeigen sie im statischen Schertest bei erhöhten Temperaturen hohe Scherfestigkeiten und weisen ferner hohe Wärmebeständigkeiten auf, wie im SAFT-Versuch ("Shear Adhesion Failure Temperature") ersichtlich.

Die hohe Schockresistenz der erfindungsgemäßen Haftklebestreifen zeigt sich in Form einer hohen Schlagzähigkeit in z-Richtung, aber auch in der x,y-Ebene (d.h. Querschlagzähigkeit). Außerdem weisen sie im Kugelfalltest (Schlagzähigkeit, Ball drop) sehr gute Werte auf. Ferner bestechen sie durch eine hohe Push-out-Festigkeit (in der z-Ebene).

Daneben verfügen die erfindungsgemäßen Haftklebemassen beispielsweise über ein günstiges Stauch-/Härteverhalten und ein sehr gutes Kompressionsvermögen.

Ferner verfügen die erfindungsgemäßen Haftklebemassen über eine gute Klebkraft auf rauen Untergründen, gute Dämpfungs- und/oder Abdichteigenschaften bzw. eine gute Anschmiegsamkeit auf unebenen Untergründen.

Die nähere Erläuterung der Wärmescherfestigkeit der erfindungsgemäßen Haftklebemassen erfolgt in den Beispielen.

## Figuren

Anhand der nachfolgend beschriebenen Figuren werden besonders vorteilhafte Ausführungen der Erfindung näher erläutert, ohne damit die Erfindung unnötig einschränken zu wollen.

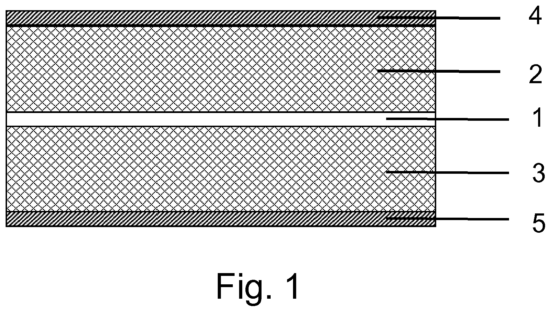

In Figur 1 ist der schematische Aufbau eines erfindungsgemäßen dreischichtigen Haftklebstreifens aus drei Schichten 1, 2, 3 als Querschnitt dargestellt.

Der Streifen umfasst einen nichtdehnbaren Folienträger 1 (Schicht F) in Form einer beidseitig geätzten PET-Folie. Auf der Oberseite und auf der Unterseite der PET-Folie 1 sind zwei außenliegende selbstklebende Klebemassenschichten 2, 3 (Schicht SK1 und Schicht SK2) vorhanden. Die selbstklebenden Klebemassenschichten 2, 3 (Schichten SK1 und SK2) sind in der dargestellten beispielhaften Ausführung ihrerseits jeweils mit einem Liner 4, 5 eingedeckt.

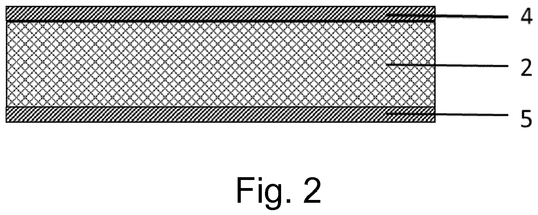

In Figur 2 ist ferner der schematische Aufbau eines erfindungsgemäßen einschichtigen Haftklebstreifens bestehend aus einer Schicht 2 als Querschnitt dargestellt.

Der Streifen umfasst eine selbstklebende Klebemassenschicht 2 (Schicht SK1). Die selbstklebende Klebemassenschicht 2 (Schicht SK1) ist in der dargestellten beispielhaften Ausführung jeweils mit einem Liner 4, 5 eingedeckt.

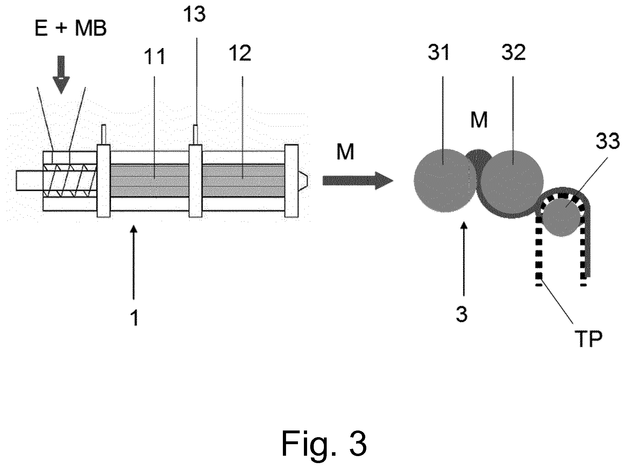

Weiterhin umfasst die Erfindung ein Verfahren zur Herstellung einer erfindungsgemäßen Selbstklebemasseschicht, siehe Figur 3, wobei

- die Bestandteile zur Bildung einer Klebemasse wie Polymere, Harze oder Füllstoffe und nicht expandierte Mikroballons in einem ersten Mischaggregat gemischt werden und unter Überdruck auf Expansionstemperatur erhitzt werden,
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,

- die Klebemassemischung mitsamt der expandierten Mikroballons gegebenenfalls auf ein bahnförmiges Träger- oder Releasematerial aufgebracht wird.

Weiterhin umfasst die Erfindung ein Verfahren zur Herstellung einer erfindungsgemäßen Selbstklebemasseschicht, siehe ebenfalls Figur 3, wobei

- die Bestandteile zur Bildung einer Klebemasse wie Polymere, Harze oder Füllstoffe und nicht expandierte Mikroballons in einem ersten Mischaggregat gemischt werden und auf Expansionstemperatur erhitzt werden
- die Mikroballons während des Mischens zumindest teilweise expandieren, bevorzugt vollständig expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

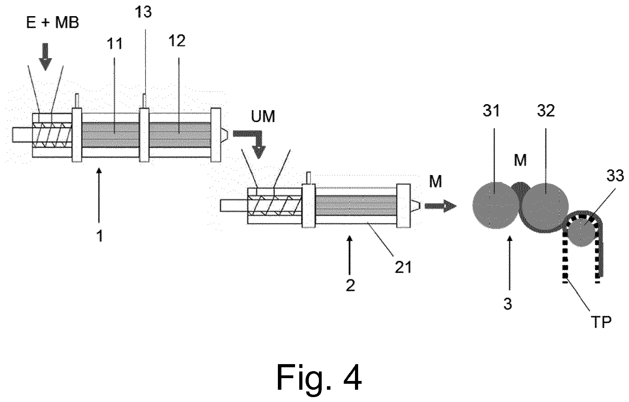

Ebenso umfasst die Erfindung ein Verfahren zur Herstellung einer erfindungsgemäßen Selbstklebemasseschicht, siehe Figur 4, wobei

- die Bestandteile zur Bildung einer Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
- die gemischte, insbesondere homogene Klebemasse aus dem ersten Mischaggregat in ein zweites Aggregat übergeben werden und auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

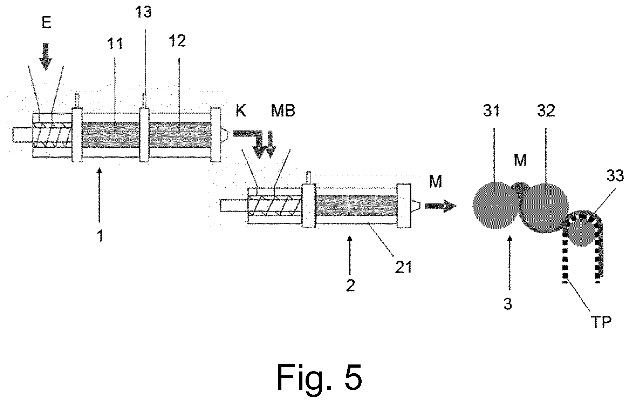

Ebenso betrifft die Erfindung ein Verfahren zur Herstellung einer erfindungsgemäßen Selbstklebemasseschicht, siehe Figur 5, wobei

- die Bestandteile zur Bildung einer Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das auch die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

Die in den Figuren 3 bis 5 veranschaulichten Verfahren zur Herstellung einer erfindungsgemäßen Selbstklebemasseschicht stellen somit jeweils ein Verfahren dar, in dem ein Haftklebestreifen bereitgestellt werden kann, der aus einer einzigen Selbstklebemasseschicht besteht, d.h. ein Transfertape. Optional kann die Selbstklebemasseschicht dabei mit bahnförmigem Releasematerial, d.h. einem Liner, eingedeckt werden. Vorzugsweise wird die Selbstklebemasseschicht auf beiden Oberflächen mit einem Liner eingedeckt.

Wird in den Verfahren aus den Figuren 3 bis 5 die erhaltene Selbstklebemasseschicht auf ein bahnförmiges Trägermaterial, d.h. einen Folienträger F, aufgebracht, so ergibt sich ein einseitiges Klebeband. Optional kann anschließend die der Folienträgerschicht F gegenüber liegende Oberfläche der Selbstklebemasseschicht mit bahnförmigem Releasematerial, d.h. einem Liner, eingedeckt werden.

Wird im Dreischichtsystem aus Folienträgerschicht F, Selbstklebemasseschicht und Liner anschließend auf die der Selbstklebemasseschicht gegenüber liegende Oberfläche der Folienträgerschicht F eine weitere Selbstklebemasseschicht aufgebracht, so ergibt sich ein erfindungsgemäßes doppelseitiges Klebeband mit Folienträger. Optional kann anschließend die der Folienträgerschicht F gegenüber liegende Oberfläche der Selbstklebemasseschicht mit bahnförmigem Releasematerial, d.h. einem Liner, eingedeckt werden.

Gemäß einer bevorzugten Ausführungsform der Erfindung wird die Klebemasse in einem Walzenauftragswerk ausgeformt und auf das Trägermaterial aufgebracht.

Mit Mikroballons geschäumte Massen müssen in der Regel vor der Beschichtung nicht entgast werden, um ein gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Des Weiteren ist vorteilhaft, wenn

- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Mit den erfindungsgemäßen Verfahren sind alle vorbekannten und in der Literatur beschriebenen Komponenten von Klebemassen, insbesondere selbstklebende, lösemittelfrei verarbeitbar.

Im Folgenden werden die oben beschriebenen, innerhalb des Erfindungsgedankens liegenden Verfahren in besonders hervorragend ausgestalteten Varianten veranschaulicht, ohne sich durch die Wahl der abgebildeten Figuren unnötig beschränken zu wollen.

Es zeigen

Figur 3    das Verfahren mit einem Mischaggregat, wobei die Mikroballons direkt im ersten Mischaggregat zugesetzt werden,

Figur 4    das Verfahren mit zwei Mischaggregaten, wobei die Mikroballons im ersten Mischaggregat zugesetzt werden, sowie

Figur 5    das Verfahren mit zwei Mischaggregaten, wobei die Mikroballons erst im zweiten Mischaggregat zugesetzt werden.

In der Figur 3 ist ein besonders vorteilhaft gestaltetes Verfahren zur Herstellung einer geschäumten druckempfindlichen Klebemasseschicht gezeigt.

In einem kontinuierlichen Mischaggregat wie zum Beispiel einem Planetwalzenextruder (PWE) wird die Haftklebemasse hergestellt.

Dazu werden die Edukte E, die die Klebemasse bilden sollen, in den Planetwalzenextruder PWE 1 aufgegeben. Gleichzeitig werden die nicht expandierten Mikroballons MB während des Compoundierprozesses in die Selbstklebemasse homogen eingearbeitet.

Die erforderlichen Temperaturen zur homogenen Herstellung der Selbstklebemasse und zur Expansion der Mikroballons sind so aufeinander abgestimmt, dass die Mikroballons während des Mischens zumindest beginnen zu expandieren und bevorzugt beim Austritt aus dem PWE 1 durch den Druckabfall bei Düsenaustritt in der Selbstklebemasse M vollständig aufschäumen und dabei die Masseoberfläche durchbrechen.

Mit einem Walzenauftragswerk 3 als Ausformaggregat wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

In der Figur 4 ist ein weiteres besonders vorteilhaft gestaltetes Verfahren zur Herstellung einer geschäumten druckempfindlichen Klebemasseschicht gezeigt.

Der Planetwalzenextruder PWE 1 weist zwei hintereinander geschaltete Mischzonen 11, 12 auf, in denen sich eine Zentralspindel dreht. Des Weiteren sind sechs Planetenspindeln je Heizzone vorhanden. In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Zweischneckenextruder homogen in die Selbstklebemasse eingearbeitet, oberhalb der Expansionstemperatur erhitzt und geschäumt.

Dazu wird die aus den Edukten E gebildete Klebemasse K hier in den Zweischneckenextruder ESE 2 aufgegeben, gleichzeitig werden die Mikroballons MB eingefüllt. Der Zweischneckenextruder ESE weist über die Lauflänge 21 insgesamt vier Heizzonen auf.

Ein geeignetes Gerät ist beispielsweise ein Zweischneckenextruder der Firma Kiener.

Die geschäumten Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

In der Figur 5 ist ein weiteres besonders vorteilhaft gestaltetes Verfahren zur Herstellung einer geschäumten druckempfindlichen Klebemasseschicht gezeigt.

In einem kontinuierlichen Mischaggregat wie zum Beispiel einem Planetwalzenextruder (PWE) wird die Haftklebemasse hergestellt.

Hier werden die Edukte E, die die Klebemasse bilden sollen, in den Planetwalzenextruder PWE 1 aufgegeben. Der Planetwalzenextruder PWE 1 weist zwei hintereinander geschaltete Mischzonen 11, 12 auf, in denen sich eine Zentralspindel dreht. Des Weiteren sind 6 Planetenspindeln je Heizzone vorhanden.

In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

Mit sinkendem Spaltdruck im Walzenspalt verringern sich die Verklebungsflächen der beschichteten, geschäumten Selbstklebemassen, da die Mikroballons dann weniger stark zurückgedrückt werden, wie der Figur 3 entnommen werden kann. Die Figur 3 zeigt die Verklebungsflächen in Abhängigkeit vom Beschichtungsverfahren beziehungsweise -parameter. Der benötigte Spaltdruck ist stark abhängig von dem verwendeten Massesystem, je höher die Viskosität, desto größer sollte der Spaltdruck sein, abhängig von der gewünschten Schichtdicke und der gewählten Beschichtungsgeschwindigkeit. In der Praxis hat sich ein Spaltdruck von größer 4 N/mm bewährt, unter besonders hohen Beschichtungsgeschwindigkeiten größer 50 m/min, bei niedrigen Masseaufträgen (Flächengewichten kleiner 70 g/m$^2$) und hochviskosen Massen (50.000 Pa*s bei 0,1 rad und 110 °C) können auch Spaltdrücke größer 50 N/mm benötigt werden.

Es hat sich bewährt, die Temperatur der Walzen der Expansionstemperatur der Mikroballons anzupassen. Idealerweise liegt die Walzentemperatur der ersten Walzen über der Expansionstemperatur der Mikroballons, um ein Nachschäumen der Mikroballons zu ermöglichen, ohne sie zu zerstören. Die letzte Walze sollte eine Temperatur gleich oder unter der Expansionstemperatur aufweisen, damit die Mikroballonhülle erstarren kann und sich die erfindungsgemäße, glatte Oberfläche ausbildet.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Erfindungsgemäß wird vorgeschlagen, die Beschichtung der geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Als besonders vorteilhaft hat sich dabei erwiesen, die Temperaturführung der einzelnen Walzen so zu wählen, dass gegebenenfalls eine kontrollierte Nachschäumung stattfinden kann, in der Weise, dass übergebende Walzen eine Temperatur oberhalb oder gleich der Schäumungstemperatur der gewählten Mikroballon-Type aufweisen können, während abnehmende Walzen eine Temperatur unterhalb oder gleich der Schäumungstemperatur haben sollten, um eine unkontrollierte Schäumung zu verhindern, und wobei alle Walzen einzeln auf Temperaturen von 30 bis 220 °C eingestellt werden können.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

In einem alternativen Verfahren zur Herstellung einer erfindungsgemäßen Selbstklebemasseschicht werden alle Bestandteile der Klebemasse in einem Lösemittelgemisch (Benzin/Toluol/Aceton) aufgelöst. Die Mikroballons werden in Benzin angeschlämmt und in die gelöste Klebemasse eingerührt. Hierzu können grundsätzlich die bekannten Compoundier- und Rühreinheiten eingesetzt werden, wobei darauf zu achten ist, dass die Mikroballons bei der Vermischung noch nicht expandieren. Sobald die Mikroballons homogen in der Lösung verteilt sind, kann die Klebemasse beschichtet werden, wobei wiederum Beschichtungssysteme gemäß des Standes der Technik eingesetzt werden können. Beispielsweise kann die Beschichtung durch einen Rakel auf einen konventionellen PET-Liner geschehen. Im nächsten Schritt wird die beschichtete Klebemasse bei 100 °C für 15 min getrocknet. In keinem der vorgenannten Schritte kommt es zu einer Expansion der Mikroballons. Nach dem Trocknen wird die Klebeschicht mit einer zweiten Lage PET-Liner oder mit einem Folienträger eingedeckt und in einem passenden Temperatur-Zeit-Fenster, etwa für 5 min bei 150 °C oder für 1 min bei 170 °C, im Ofen geschäumt, und zwar abgedeckt zwischen den zwei Linern bzw. zwischen dem Liner und dem Folienträger, um eine besonders glatte Oberfläche zu erzeugen.

Wird die getrocknete Klebeschicht zwischen den zwei Linern geschäumt, so ergibt sich ein erfindungsgemäßer Haftklebestreifen, der aus der Selbstklebeschicht besteht. Wird die Selbstklebeschicht zwischen dem Liner und dem Folienträger geschäumt, so ergibt sich ein erfindungsgemäßer Haftklebestreifen in Form eines einseitigen Klebebandes.

Alternativ kann vor dem Schäumen der zwischen dem Liner und dem Folienträger lokalisierten getrockneten Selbstklebeschicht auf die der getrockneten Selbstklebeschicht gegenüberliegende Oberfläche des Folienträgers eine zweite ebenfalls getrocknete Mikroballon-haltige Selbstklebeschicht kaschiert werden, die ihrerseits auf einem Liner aufgebracht ist, so dass ein ungeschäumter Dreischichtverbund aus einem innenliegenden Folienträger und zwei in direktem Kontakt mit dem Folienträger stehenden, Selbstklebeschichten, die auf ihren Außenflächen wiederum mit Linern versehen sind, bereitgestellt werden kann. Ein solcher Dreischichtverbund lässt sich auch dadurch bereitstellen, dass der Folienträger F direkt mit den Mikroballons-haltigen ungeschäumten Selbstklebemassen gleichzeitig oder nacheinander beschichtet wird, woraufhin die Selbstklebemasseschichten bei 100 °C für 15 min getrocknet und dann mit Linern abgedeckt werden. Nach dem Trocknen werden die Klebeschichten in einem passenden Temperatur-Zeit-Fenster, etwa für 5 min bei 150 °C oder für 1 min bei 170 °C, im Ofen geschäumt, und zwar abgedeckt zwischen den zwei Linern, um eine besonders glatte Oberfläche zu erzeugen. Es ergibt sich ein erfindungsgemäßer Haftklebestreifen in Form eines doppelseitigen Klebebandes mit Träger.

Die so erzeugte Oberfläche der Selbstklebeschicht weist eine Rauigkeit $R_a$ kleiner 15 $\mu$m, besonders bevorzugt kleiner 10 $\mu$m auf, ganz besonders bevorzugt von kleiner 3 $\mu$m auf.

Die Oberflächenrauigkeit $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Anders ausgedrückt ist $R_a$ die arithmetische Mittenrauigkeit, d.h. der arithmetische Mittelwert aller Profilwerte des Rauheitsprofils. Gemessen wird $R_a$ mittels Lasertriangulation.

Die Expansionstemperatur wird insbesondere höher als die Trocknungstemperatur gewählt, um die Expansion der Mikroballons bei der Trocknung zu vermeiden.

Nachfolgend wird die Erfindung durch einige Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

## Beispiele

Im Folgenden wird die Herstellung von erfindungsgemäßen Haftklebestreifen beschrieben, die jeweils aus einer einzigen Selbstklebemasseschicht SK1 bestehen, die auf einer mit Mikroballons Expancel 920 DU80 geschäumten Vinylaromatenblockcopolymer-Masse basiert. Dabei wurde der Mikroballongehalt an Expancel 920 DU80 variiert.

Hierzu wurde zuerst eine 40 gew.-%ige Klebelösung in Benzin/Toluol/Aceton hergestellt von 50,0 Gew.-% Kraton D1102AS, 45,0 Gew.-% Dercolyte A115, 4,5 Gew.-% Wingtack 10 und 0,5 Gew.-% Alterungsschutzmittel Irganox 1010 (auch Klebelösung 1 genannt). Die Gewichtsanteile der gelösten Bestandteile beziehen sich dabei jeweils auf das Trockengewicht der resultierenden Lösung. Die genannten Bestandteile der Klebemasse sind wie folgt charakterisiert:

| | |
|---|---|
| Kraton D1102AS: | Styrol-Butadien-Styrol-Triblockcopolymer der Firma Kraton Polymers mit 17 Gew.-% Diblock, Blockpolystyrolgehalt: 30 Gew.-% |
| Dercolyte A115: | festes $\alpha$-Pinen-Klebharz mit einer Ring und Ball-Erweichungstemperatur von 115 °C und einem DACP von 35 °C |

(fortgesetzt)

| Wingtack 10: | Flüssiges Kohlenwasserstoffharz der Firma Cray Valley |
| Irganox 1010: | Pentaerythritoltetrakis(3-(3,5-di-tert-butyl-4-hydroxyphenyl)propionat) der BASF SE |

Die Lösung wurde anschließend mit 2 Gew.-% oder 3 Gew.-% unexpandierten Mikroballons Expancel 920 DU80 versetzt, wobei die Mikroballons als Anschlämmung in Benzin eingesetzt wurden. Die Gewichtsanteile der Mikroballons beziehen sich hier jeweils auf das Trockengewicht der eingesetzten Lösung, zu der sie gegeben wurden (d.h. das Trockengewicht der eingesetzten Lösung wird als 100% festgesetzt). Die erhaltene Mischung wurde dann mit einem Streichbalken auf einen PET-Liner, ausgerüstet mit einem trennenden Silikon, in der gewünschten Schichtdicke ausgestrichen, anschließend wurde bei 100 °C für 15 min das Lösungsmittel abgedampft und so die Masseschicht getrocknet.

Daraufhin wurde jeweils auf die freie Oberfläche der hergestellten und getrockneten Klebmassenschicht ein zweiter PET-Liner kaschiert und die Klebemassenschicht anschließend für 5 min bei 150 °C zwischen den beiden Linern im Ofen geschäumt. Durch das Schäumen zwischen zwei Linern sind Produkte mit besonders glatten Oberflächen erhältlich (mit $R_a$- Werten kleiner 15 $\mu$m). Durch Ausstanzen wurden erfindungsgemäße Haftklebestreifen der gewünschten Abmessungen erhalten (Beispiele 1 und 2). Die Haftklebestreifen wurden so hergestellt, dass sie eine Dicke von etwa 150 $\mu$m aufwiesen. Die Dicke bezieht sich auf die Haftklebestreifen ohne PET-Liner.

In Vergleichsversuchen wurde die Herstellung der Haftklebestreifen in gleicher Weise wiederholt, wobei allerdings anstelle von unexpandierten Mikroballons Expancel 920 DU80 unexpandierte Mikroballons der Typen Expancel 920 DU20, Expancel 920 DU40 bzw. Expancel 920 DU120 eingesetzt wurden. Die Gewichtsanteile der Mikroballons wurden dabei bei Verwendung von Expancel 920 DU20 bzw. Expancel 920 DU40 erneut zu 2 Gew.-% bzw. 3 Gew.-% gewählt, und bei Verwendung von Expancel 920 DU120 zu 0,9 Gew.-% bzw. 2 Gew.-% gewählt, jeweils bezogen auf das Trockengewicht der eingesetzten Klebelösung (Vergleichsbeispiele 1 bis 6). Die Haftklebestreifen wurden ebenfalls so hergestellt, dass sie eine Dicke von etwa 150 $\mu$m aufwiesen. Die Dicke bezieht sich auf die Haftklebestreifen ohne PET-Liner.

Im Folgenden wird ferner die Herstellung eines erfindungsgemäßen Haftklebestreifens beschrieben, der aus einer einzigen Selbstklebemasseschicht SK1 besteht, die ebenfalls auf einer mit Mikroballons Expancel 920 DU80 geschäumten Vinylaromatenblockcopolymer-Masse basiert. Dabei wurde jedoch eine andere Klebelösung eingesetzt (auch Klebelösung 2 genannt).

Hierzu wurde zuerst eine 40 gew.-%ige Klebelösung in Benzin/Toluol/Aceton hergestellt von 25,0 Gew.-% Kraton D1101AS, 25,0 Gew.-% Kraton D1118ES, 45,0 Gew.-% Dercolyte A115, 4,5 Gew.-% Wingtack 10 und 0,5 Gew.-% Alterungsschutzmittel Irganox 1010 (Klebelösung 2 genannt). Die Gewichtsanteile der gelösten Bestandteile beziehen sich dabei jeweils auf das Trockengewicht der resultierenden Lösung. Die genannten Bestandteile der Klebemasse sind wie folgt charakterisiert:

| Kraton D1101AS: | Styrol-Butadien-Styrol-Triblockcopolymer der Firma Kraton Polymers mit 16 Gew.-% Diblock, Blockpolystyrolgehalt: 31 Gew.-% |
| Kraton D1118ES: | Styrol-Butadien-Styrol-Triblockcopolymer der Firma Kraton Polymers mit 78 Gew.-% Diblock, Blockpolystyrolgehalt: 33 Gew.-% |
| Dercolyte A115: | festes $\alpha$-Pinen-Klebharz mit einer Ring und Ball-Erweichungstemperatur von 115 °C und einem DACP von 35 °C |
| Wingtack 10: | Flüssiges Kohlenwasserstoffharz der Firma Cray Valley |
| Irganox 1010: | Pentaerythritoltetrakis(3-(3,5-di-tert-butyl-4-hydroxyphenyl)propionat) der BASF SE |

Die Lösung wurde anschließend mit 2 Gew.-% unexpandierten Mikroballons Expancel 920 DU80 versetzt, wobei die Mikroballons als Anschlämmung in Benzin eingesetzt wurden. Der Gewichtsanteil der Mikroballons bezieht sich auf das Trockengewicht der eingesetzten Lösung, zu der sie gegeben wurden (d.h. das Trockengewicht der eingesetzten Lösung wird als 100% festgesetzt). Die erhaltene Mischung wurde dann mit einem Streichbalken auf einen PET-Liner, ausgerüstet mit einem trennenden Silikon, in der gewünschten Schichtdicke ausgestrichen, anschließend wurde bei 100 °C für 15 min das Lösungsmittel abgedampft und so die Masseschicht getrocknet.

Daraufhin wurde auf die freie Oberfläche der hergestellten und getrockneten Klebmassenschicht ein zweiter PET-Liner kaschiert und die Klebemassenschicht anschließend für 5 min bei 150 °C zwischen den beiden Linern im Ofen geschäumt. Durch das Schäumen zwischen zwei Linern sind Produkte mit besonders glatten Oberflächen erhältlich (mit Ra- Werten kleiner 15 $\mu$m). Durch Ausstanzen wurde ein erfindungsgemäßer Haftklebestreifen der gewünschten Abmessung erhalten (Beispiel 3). Der Haftklebestreifen wurde so hergestellt, dass er eine Dicke von etwa 150 $\mu$m aufweist. Die Dicke bezieht sich auf den Haftklebestreifen ohne PET-Liner.

In einem Vergleichsversuch wurde die Herstellung des Haftklebestreifens in gleicherweise wiederholt, wobei allerdings anstelle von unexpandierten Mikroballons Expancel 920 DU80 unexpandierte Mikroballons des Typs Expancel 920 DU20 eingesetzt wurden. Der Gewichtsanteil der Mikroballons wurde dabei erneut zu 2 Gew.-% gewählt, bezogen auf das Trockengewicht der eingesetzten Klebelösung (Vergleichsbeispiel 7). Der Haftklebestreifen wurde ebenfalls so hergestellt, dass er eine Dicke von etwa 150 $\mu$m aufwies. Die Dicke bezieht sich auf den Haftklebestreifen ohne PET-Liner.

Die nachstehende Tabelle 1 zeigt die Wärmescherfestigkeiten der erfindungsgemäßen Haftklebestreifen (Beispiele 1 bis 3) sowie der nichterfindungsgemäßen Haftklebestreifen (Vergleichsbeispiele 1 bis 7).

Tabelle 1: Wärmescherfestigkeiten von erfindungsgemäßen Haftklebestreifen und von Vergleichsbeispielen.

| Versuch | Klebelösung | MB[1]-Typ | MB[1]-Gehalt (Gew.-%) | Dichte SKMS[2] (kg/m$^3$) | SSZ[3] 70°C/ 1 kg (min) | SSZ[3] 80°C/0,5 kg (min) | SAFT[4] (°C) |
|---|---|---|---|---|---|---|---|
| Beispiel 1 | 1 | DU80 | 2,0 | 639 | 134 | 338 | 118,2 |
| Beispiel 2 | 1 | DU80 | 3,0 | 522 | 147 | 304 | 118,1 |
| Beispiel 3 | 2 | DU80 | 2,0 | 702 | 146 | 516 | 129,9 |
| Vergleichsbeispiel 1 | 1 | DU20 | 2,0 | 651 | 88 | 84 | 111,2 |
| Vergleichsbeispiel 2 | 1 | DU20 | 3,0 | 599 | 46 | 42 | 113,0 |
| Vergleichsbeispiel 3 | 1 | DU40 | 2,0 | 630 | 104 | 227 | 111,1 |
| Vergleichsbeispiel 4 | 1 | DU40 | 3,0 | 567 | 103 | 209 | 117,2 |
| Vergleichsbeispiel 5 | 1 | DU120 | 0,9 | 667 | 100 | 95 | 110,7 |
| Vergleichsbeispiel 6 | 1 | DU120 | 2,0 | 530 | 140 | 251 | 114,4 |
| Vergleichsbeispiel 7 | 2 | DU20 | 2,0 | 707 | 89 | 262 | 122,6 |

[1] MB = Mikroballon; [2] SKMS = Selbstklebemasseschicht; [3] SSZ = Statische Scherfestigkeit; [4] SAFT = Shear Adhesion Failure Temperature (tesa-SAFT), Wärmebeständigkeit.

Die Beispiele 1 bis 3 zeigen, dass überraschenderweise in Haftklebestreifen hervorragende statische Scherfestigkeiten und Wärmebeständigkeiten erzielt werden können, wenn die Selbstklebemasseschichten auf Vinylaromatenblockcopolymerbasis mit unexpandierten Mikroballons Expancel 920 DU80 geschäumt sind.

Ein Vergleich der erfindungsgemäßen Haftklebestreifen mit den Haftklebestreifen der Vergleichsbeispiele, deren Selbstklebemasseschichten auf Vinylaromatenblockcopolymerbasis mit deutlich kleineren Mikroballons oder deutlich größeren Mikroballons geschäumt sind, zeigt, dass offensichtlich Hohlräume in den geschäumten Klebemasseschichten zu deutlich verbesserten Wärmescherfestigkeiten führen, wenn diese einen mittleren Durchmesser in der Größenordnung von etwa 80 $\mu$m aufweisen.

Ein Vergleich der Beispiele 1 und 2 zeigt, dass in den erfindungsgemäßen Haftklebestreifen bei Gehalten an Mikroballons von 2 Gew.-% bzw. 3 Gew.-% ähnlich gute Wärmescherfestigkeiten erzielt werden können.

Die Beispiele 1 bis 3 zeigen ferner, dass in den erfindungsgemäßen Haftklebestreifen über einen breiten absoluten Dichtebereich von etwa 500 bis 750 kg/m$^3$ der Selbstklebemassen hervorragende Wärmescherfestigkeiten zu erwarten sind.

Ein Vergleich der Beispiele 1 und 3 zeigt ferner, dass sich in erfindungsgemäßen Haftklebestreifen die Wärmescherfestigkeiten auch durch eine geeignete Auswahl der Vinylaromatenblockcopolymermasse weiter verbessern lässt.

*Prüfmethoden*

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Rückstellvermögen beziehungsweise Elastizität*

Zur Messung des Rückstellvermögens wurden die Haftklebestreifen um 100 % gedehnt, in dieser Dehnung für 30 s gehalten und dann entspannt. Nach einer Wartezeit von 1 min wurde erneut die Länge gemessen.
Das Rückstellvermögen berechnet sich nun wie folgt:

$$RV = ((L_{100} - L_{end}) / L_0)*100$$

mit RV = Rückstellvermögen in %
$L_{100}$ : Länge des Klebestreifens nach der Dehnung um 100 %
$L_0$ : Länge des Klebestreifens vor der Dehnung
$L_{end}$ : Länge des Klebestreifens nach der Relaxation von 1 min.

Das Rückstellvermögen entspricht dabei der Elastizität.

*Zugfestigkeit und Reißdehnung (Messmethode R1)*

Die Zugfestigkeit und die Reißdehnung wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Elastizitätsmodul*

Der Elastizitätsmodul gibt den mechanischen Widerstand an, den ein Werkstoff einer elastischen Verformung entgegensetzt. Er wird bestimmt als das Verhältnis der erforderlichen Spannung $\sigma$ zur erzielten Dehnung $\varepsilon$, wobei $\varepsilon$ der Quotient aus der Längenänderung $\Delta L$ und der Länge $L_0$ im Hookeschen Verformungsregime des Probekörpers ist. Die Definition des Elastizitätsmoduls ist beispielsweise im Taschenbuch der Physik erläutert (H. Stöcker (Hrsg.), Taschenbuch der Physik, 2. Aufl., 1994, Verlag Harri Deutsch, Frankfurt, S. 102 - 110).
Zur Bestimmung des Elastizitätsmoduls einer Folie wurde das Zugdehnungsverhalten an einem Prüfling vom Typ 2 (rechteckiger 150 mm langer und 15 mm breiter Folien-Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei der Prüfstreifen zur Ermittlung der Daten mit scharfen Klingen zugeschnitten wurde. Zum Einsatz kam eine Zugprüfmaschine der Fa. Zwick (Modell Z010). Das Zugdehnungsverhalten wurde in Maschinenrichtung (MD) gemessen. Zum Einsatz kam ein 1000 N (Zwick Roell Typ Kap-Z 066080.03.00) bzw. 100 N (Zwick Roell Typ Kap-Z 066110.03.00) Kraftmessdose. Der Elastizitätsmodul wurde aus den Messkurven grafisch durch Bestimmung der Steigung des für das Hookesche-Verhalten charakteristischen Anfangsbereichs der Kurve ermittelt und in GPa angegeben.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*Durchmesser*

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

*Dichte*

Die Dichte der ungeschäumten und der geschäumten Klebemasseschichten wird ermittelt durch Quotientenbildung aus Masseauftrag und Dicke der auf einen Träger oder Liner aufgetragenen Klebemassenschicht.

Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

Die Dicke einer Klebemasseschicht kann durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Dicke*

Wie bereits die Dicke einer Klebemasseschicht lässt sich auch die Dicke eines Haftklebestreifens bzw. einer Folienträgerschicht über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Shear Adhesion Failure Temperature (SAFT), Wärmebeständigkeit*

Dieser Test dient der Schnellprüfung der Scherfestigkeit von Haftklebestreifen unter Temperaturbelastung. Dafür wird der zu untersuchende Haftklebestreifen auf eine temperierbare Stahlplatte geklebt, mit einem Gewicht (50 g) belastet und die Scherstrecke aufgezeichnet.

Messprobenpräparation:

Der zu untersuchende Haftklebestreifen wird, falls es sich um einen doppelseitig klebenden Haftklebestreifen handelt, mit einer der Klebemassenseiten auf eine 50 $\mu$m dicke Aluminiumfolie geklebt. Der ggf. so präparierte Haftklebestreifen wird auf eine Größe von 10 mm * 50 mm geschnitten.

Die zugeschnittene Haftklebestreifenprobe wird mit der anderen Klebemassenseite auf eine polierte, mit Aceton gereinigte Stahl-Prüfplatte (Werkstoff 1.4301, DIN EN 10088-2, Oberfläche 2R, Oberflächen-Rauigkeit $R_a$ = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

Messung:

Die zu messende Probe wird am unteren Ende mit einem Gewicht von 50 g belastet. Die Stahl-Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 $\mu$m (1 mm) festgelegt, bei überschreiten wird der Test abgebrochen und die Versagenstemperatur notiert.

Prüfklima: Raumtemperatur 23 +/- 3 °C, relative Luftfeuchtigkeit 50 +/- 5%.

*Quantitative Ermittlung der Scherfestigkeit: Statischer Schertest SSZ*

Ein Haftklebestreifen wird in einem auf 70 °C oder 80 °C temperierten Klimaschrank auf einen vorgegebenen, starren Haftuntergrund (hier Stahl) aufgebracht und einer konstanten Scherbelastung ausgesetzt. Ermittelt wird die Haltedauer in Minuten.

Durch eine geeignete Plattenaufhängung (Winkel 179 $\pm$ 1°) wird sichergestellt, dass sich der Haftklebestreifen nicht von der Unterkante der Platte abschält.

In erster Linie soll die Prüfung eine Aussage über die Kohäsivität der Masse liefern. Dies ist aber nur dann der Fall, wenn die Parameter Gewicht und Temperatur so gewählt werden, dass es bei der Prüfung tatsächlich zu Kohäsionsversagen kommt.

Ansonsten gibt der Test Aufschluss über die Adhäsion zum Haftgrund oder über eine Kombination aus Adhäsion und Kohäsivität der Masse.

Ein 13 mm breiter Streifen des zu prüfenden Haftklebestreifens wird auf einem polierten Stahlplättchen (Prüfuntergrund) auf einer Länge von 5 cm mit einer 2 kg-Rolle durch 10 maliges Überrollen verklebt. Doppelseitig klebende Haftklebestreifen werden auf der Rückseite mit einer 50 $\mu$m starken Aluminiumfolie abgedeckt und somit verstärkt. Anschließend wird eine Gurtschlaufe an das untere Ende des Klebebandes angebracht. Sodann wird mit Schraube und Mutter ein Adapterplättchen auf der Vorderseite der Schertestplatte befestigt, um den vorgegebenen Winkel von 179 $\pm$ 1° zu gewährleisten. Die Aufziehzeit zwischen Anrollen und Belastung soll zwischen 10 und 15 Minuten liegen. Die Gewichte von 500 g bzw. 1 kg werden anschließend ruckfrei mit Hilfe der Gurtschlaufe angehängt.

Eine automatische Zähleruhr ermittelt nun den Zeitpunkt des Abscherens der Prüfmuster.

**Patentansprüche**

1. Haftklebestreifen, der zumindest eine Schicht SK1, vorzugsweise genau eine Schicht SK1, aus einer selbstklebenden Masse umfasst, die auf einer mit Mikroballons geschäumten Vinylaromatenblockcopolymer-Masse basiert, wobei der mittlere Durchmesser (ermittelt nach der Methode in der Beschreibung) der von den Mikroballons gebildeten Hohlräume in der Selbstklebemasseschicht SK1 45 bis 110 $\mu$m beträgt, **dadurch gekennzeichnet, dass** die absolute Dichte (ermittelt nach der Methode in der Beschreibung) der geschäumten Selbstklebemasseschicht SK1 500 bis 750 kg/m$^3$ beträgt.

2. Haftklebestreifen nach Anspruch 1,
   **dadurch gekennzeichnet, dass**
   der Haftklebestreifen aus der Selbstklebemasseschicht SK1 besteht.

3. Haftklebestreifen nach Anspruch 2,
   **dadurch gekennzeichnet, dass**
   die Selbstklebemasseschicht SK1 eine Dicke von 45 bis 5000 $\mu$m aufweist, bevorzugter von 80 bis 2500 $\mu$m, noch bevorzugter von 100 $\mu$m bis 2000 $\mu$m, insbesondere von 100 bis 300 $\mu$m, wie zum Beispiel 150 $\mu$m.

4. Haftklebestreifen nach Anspruch 1,
   **dadurch gekennzeichnet, dass**
   der Haftklebestreifen eine Schicht SK1 und ferner eine Schicht F aus einem Folienträger umfasst, wobei die Schicht SK1 auf einer der Oberflächen der Folienträgerschicht F angeordnet ist.

**5.** Haftklebestreifen nach Anspruch 4,
**dadurch gekennzeichnet, dass**
der Haftklebestreifen ferner eine Schicht SK2 aus einer selbstklebenden Masse auf Basis einer Vinylaromatenblockcopolymer-Masse umfasst, die auf der der Schicht SK1 gegenüber liegenden Oberfläche der Folienträgerschicht F angeordnet ist, wobei die Schicht SK2 vorzugsweise auf einer mit Mikroballons geschäumten Masse basiert, wobei der mittlere Durchmesser der von den Mikroballons gebildeten Hohlräume in der Schicht SK2 insbesondere 45 bis 110 $\mu$m beträgt.

**6.** Haftklebestreifen nach Anspruch 4 oder 5,
**dadurch gekennzeichnet, dass**
die Folienträgerschicht eine Dicke zwischen 5 und 125 $\mu$m, vorzugsweise zwischen 10 und 60 $\mu$m, bevorzugter zwischen 10 und 50 $\mu$m, noch bevorzugter zwischen 10 und 40 $\mu$m aufweist,
sowie die Selbstklebemasseschicht SK1 und die Selbstklebemasseschicht SK2, falls vorhanden, unabhängig voneinander eine Dicke zwischen 45 bis 1000 $\mu$m, bevorzugter zwischen 45 und 200 $\mu$m und insbesondere von 60 bis 150 $\mu$m aufweisen.

**7.** Haftklebestreifen nach einem der Ansprüche 5 oder 6,
**dadurch gekennzeichnet, dass**
der Haftklebestreifen einen in Bezug auf die Zusammensetzung der Schichten symmetrischen Aufbau aufweist, indem die geschäumten Vinylaromatenblockcopolymer-Massen der beiden Selbstklebemasseschichten SK1 und SK2 chemisch identisch sind.

**8.** Haftklebestreifen nach einem der Ansprüche 5 bis 7,
**dadurch gekennzeichnet, dass**
der Haftklebestreifen einen strukturell symmetrischen Aufbau aufweist, indem die beiden Selbstklebemasseschichten SK1 und SK2 gleich dick sind und/oder dieselbe Dichte aufweisen.

**9.** Haftklebestreifen nach einem der vorhergehenden Ansprüche,
**dadurch gekennzeichnet, dass**
als Selbstklebemasseschichten SK1 und/oder SK2 solche auf Basis von Vinylaromatenblockcopolymeren enthaltend Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, eingesetzt werden.

**10.** Haftklebestreifen nach einem der vorhergehenden Ansprüche,
**dadurch gekennzeichnet, dass**
als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$ eingesetzt wird,
worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl $\geq 2$ stehen.

**11.** Haftklebestreifen nach Anspruch 9 oder 10,
**dadurch gekennzeichnet, dass**
die Vinylaromaten zum Aufbau des Blocks A Styrol, $\alpha$-Methylstyrol und/oder andere Styrol-Derivate umfassen, besonders bevorzugt Styrol.

**12.** Haftklebestreifen nach einem der Ansprüche 9 bis 11,
**dadurch gekennzeichnet, dass**
das Monomer für den Block B ausgewählt ist aus der Gruppe bestehend aus Butadien, Isopren, Ethylbutadien, Phenylbutadien, Piperylen, Pentadien, Hexadien, Ethylhexadien und Dimethylbutadien sowie einer beliebigen Mischung dieser Monomere.

**13.** Haftklebestreifen nach einem der vorhergehenden Ansprüche,
**dadurch gekennzeichnet, dass**
der Anteil der Vinylaromatenblockcopolymere, wie insbesondere Styrolblockcopolymere, in Summe bezogen auf die gesamte Selbstklebemasseschicht SK1 oder SK2 mindestens 20 Gew.-%, vorzugsweise mindestens 30 Gew.-%, weiter bevorzugt mindestens 35 Gew.-% und gleichzeitig maximal 75 Gew.-%, bevorzugt maximal 65 Gew.-%, ganz besonders bevorzugt maximal 55 Gew. % beträgt.

**14.** Haftklebestreifen nach einem der vorangehenden Ansprüche,
**dadurch gekennzeichnet, dass**
die Selbstklebemasseschichten SK1 und/oder SK2 auf Basis von Vinylaromatenblockcopolymer und Klebharz aufgebaut sind, wobei vorzugsweise zu mindestens 75 Gew.-% (bezogen auf den Gesamtharzanteil) ein Harz gewählt wird mit einem DACP (diacetone alcohol cloud point) von größer 0 °C, bevorzugt größer 10 °C, und einer Erweichungstemperatur (Ring & Ball) von größer gleich 70 °C, vorzugsweise größer gleich 100 °C.

**15.** Haftklebestreifen nach Anspruch 14,
**dadurch gekennzeichnet, dass**
in der Selbstklebemasseschicht SK1 und/oder SK2 20 bis 60 Gew.-% Klebharz, bezogen auf das Gesamtgewicht der Selbstklebemasseschicht, bevorzugt 30 bis 50 Gew.-% Klebharz, bezogen auf das Gesamtgewicht der Selbstklebemasseschicht, enthalten ist.

**16.** Haftklebestreifen nach Anspruch 14 oder 15,
**dadurch gekennzeichnet, dass**
es sich bei dem Klebharz zu mindestens 75 Gew.-% um Kohlenwasserstoffharz oder Terpenharz oder eine Mischung dergleichen handelt.

**17.** Haftklebstreifen nach zumindest einem der vorhergehenden Ansprüche,
**dadurch gekennzeichnet, dass**
der Anteil der Mikroballons in der geschäumten Selbstklebemasseschicht SK1 und/oder der geschäumten Selbstklebemasseschicht SK2 bis zu 12 Gew.-%, vorzugsweise zwischen 0,25 Gew.-% und 5 Gew.-%, bevorzugter zwischen 0,5 und 4 Gew.-%, noch bevorzugter zwischen 1 und 3,5 Gew.-%, insbesondere 2,0 bis 3,0 Gew.-% beträgt, jeweils bezogen auf die Gesamtzusammensetzung der Selbstklebemasseschicht.

**18.** Haftklebstreifen nach zumindest einem der vorhergehenden Ansprüche,
**dadurch gekennzeichnet, dass**
der mittlere Durchmesser der von den Mikroballons gebildeten Hohlräume in den geschäumten Selbstklebemasseschichten SK1 und/oder SK2, vorzugsweise in beiden Schichten SK1 und SK2, 60 bis 100 $\mu$m beträgt, bevorzugter 70 bis 90 $\mu$m, wie zum Beispiel 80 $\mu$m.

**19.** Haftklebstreifen nach zumindest einem der vorhergehenden Ansprüche,
**dadurch gekennzeichnet, dass**
die Selbstklebemasseschicht SK1 und/oder SK2 aus folgender Zusammensetzung besteht:

| | |
|---|---|
| • Vinylaromatenblockcopolymere | 20 bis 75 Gew.-% |
| • Klebharze | 24,6 bis 60 Gew.-% |
| • Mikroballons | 0,2 bis 10 Gew.-% |
| • Additive | 0,2 bis 10 Gew.-% |

**20.** Haftklebstreifen nach zumindest einem der vorhergehenden Ansprüche,
**dadurch gekennzeichnet, dass**
die Selbstklebemasseschicht SK1 und/oder SK2 aus folgender Zusammensetzung besteht:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |

(fortgesetzt)

| | |
|---|---|
| • Additive | 0,2 bis 10 Gew.-% |

**21.** Haftklebstreifen nach zumindest einem der Ansprüche 1 bis 18,
**dadurch gekennzeichnet, dass**
die Selbstklebemasseschicht SK1 und/oder SK2 aus folgender Zusammensetzung besteht:

| | |
|---|---|
| • Vinylaromatenblockcopolymere | 30 bis 75 Gew.-% |
| • Klebharze | 24,8 bis 60 Gew.-% |
| • Mikroballons | 0,2 bis 10 Gew.-% |

**22.** Haftklebstreifen nach zumindest einem der vorhergehenden Ansprüche,
**dadurch gekennzeichnet, dass**
die absolute Dichte (ermittelt nach der Methode in der Beschreibung) der geschäumten Selbstklebemasseschicht SK1 und/oder SK2 600 bis 700 kg/m$^3$ beträgt.

**23.** Haftklebestreifen nach einem der Ansprüche 4 bis 22,
**dadurch gekennzeichnet, dass**
der Folienträger nichtdehnbar ist.

**24.** Haftklebestreifen nach einem der Ansprüche 4 bis 22,
**dadurch gekennzeichnet, dass**
der Folienträger dehnbar ist.

**25.** Verwendung eines Haftklebestreifens nach zumindest einem der vorhergehenden Ansprüche zur Verklebung von Bauteilen wie insbesondere Akkus und elektronischen Geräten wie insbesondere Mobilgeräten, wie zum Beispiel Handys.

**Claims**

**1.** Pressure-sensitive adhesive strip comprising at least one layer SK1, preferably exactly one layer SK1, of a self-adhesive composition based on a vinylaromatic block copolymer composition foamed with microballoons, where the mean diameter (determined by the method in the description) of the voids formed by the microballoons in the self-adhesive composition layer SK1 is 45 to 110 $\mu$m, **characterized in that** the absolute density (determined by the method in the description) of the foamed self-adhesive composition layer SK1 is 500 to 750 kg/m$^3$.

**2.** Pressure-sensitive adhesive strip according to Claim 1,
**characterized in that**
the pressure-sensitive adhesive strip consists of the self-adhesive composition layer SK1.

**3.** Pressure-sensitive adhesive strip according to Claim 2,
**characterized in that**
the self-adhesive composition layer SK1 has a thickness of 45 to 5000 $\mu$m, more preferably of 80 to 2500 $\mu$m, even more preferably of 100 $\mu$m to 2000 $\mu$m, especially of 100 to 300 $\mu$m, for example 150 $\mu$m.

**4.** Pressure-sensitive adhesive strip according to Claim 1,
**characterized in that**
the pressure-sensitive adhesive strip comprises a layer SK1 and also a layer F of a film carrier, where the layer SK1 is arranged on one of the surfaces of the film carrier layer F.

**5.** Pressure-sensitive adhesive strip according to Claim 4,
**characterized in that**
the pressure-sensitive adhesive strip further comprises a layer SK2 composed of a self-adhesive composition based on a vinylaromatic block copolymer composition arranged on the opposite surface of the film carrier layer F from the layer SK1, where the layer SK2 is preferably based on a composition foamed with microballoons, where the mean diameter of the voids formed by the microballoons in the layer SK2 is especially 45 to 110 $\mu$m.

**6.** Pressure-sensitive adhesive strip according to Claim 4 or 5,
   **characterized in that**
   the film carrier layer has a thickness between 5 and 125 $\mu$m, preferably between 10 and 60 $\mu$m, more preferably between 10 and 50 $\mu$m, even more preferably between 10 and 40 $\mu$m,
   and the self-adhesive composition layer SK1 and the self-adhesive composition layer SK2, if present, independently have a thickness between 45 and 1000 $\mu$m, more preferably between 45 and 200 $\mu$m and especially from 60 to 150 $\mu$m.

**7.** Pressure-sensitive adhesive strip according to either of Claims 5 and 6,
   **characterized in that**
   the pressure-sensitive adhesive strip has a symmetric construction in relation to the composition of the layers, **in that** the foamed vinylaromatic block copolymer compositions of the two self-adhesive composition layers SK1 and SK2 are chemically identical.

**8.** Pressure-sensitive adhesive strip according to any of Claims 5 to 7,
   **characterized in that**
   the pressure-sensitive adhesive strip has a structurally symmetric construction, **in that** the two self-adhesive composition layers SK1 and SK2 are of the same thickness and/or have the same density.

**9.** Pressure-sensitive adhesive strip according to any of the preceding claims,
   **characterized in that**
   the self-adhesive composition layers SK1 and/or SK2 used are those based on vinylaromatic block copolymers comprising polymer blocks (i) predominantly formed from vinylaromatics (A blocks), preferably styrene, and simultaneously (ii) those predominantly formed by polymerization of 1,3-dienes (B blocks), for example butadiene and isoprene or a copolymer of the two.

**10.** Pressure-sensitive adhesive strip according to any of the preceding claims,
   **characterized in that**
   the vinylaromatic block copolymer used is at least one synthetic rubber in the form of a block copolymer having an A-B, A-B-A, $(A-B)_n$, $(A-B)_nX$ or $(A-B-A)_nX$ structure,
   in which

   - the A blocks are independently a polymer formed by polymerization of at least one vinylaromatic,
   - the B blocks are independently a polymer formed by polymerization of conjugated dienes having 4 to 18 carbon atoms, or a partly hydrogenated derivative of such a polymer,
   - X is the radical of a coupling reagent or initiator and
   - n is an integer $\geq 2$.

**11.** Pressure-sensitive adhesive strip according to Claim 9 or 10,
   **characterized in that**
   the vinylaromatics for formation of the A block include styrene, $\alpha$-methylstyrene and/or other styrene derivatives, more preferably styrene.

**12.** Pressure-sensitive adhesive strip according to any of Claims 9 to 11,
   **characterized in that**
   the monomer for the B block is selected from the group consisting of butadiene, isoprene, ethylbutadiene, phenylbutadiene, piperylene, pentadiene, hexadiene, ethylhexadiene and dimethylbutadiene, and any desired mixture of these monomers.

**13.** Pressure-sensitive adhesive strip according to any of the preceding claims,
   **characterized in that**
   the proportion of the vinylaromatic block copolymers, such as styrene block copolymers in particular, based on the overall self-adhesive composition layer SK1 or SK2, totals at least 20 wt%, preferably at least 30 wt%, further preferably at least 35 wt%, and simultaneously at most 75 wt%, preferably at most 65 wt%, most preferably at most 55 wt%.

**14.** Pressure-sensitive adhesive strip according to any of the preceding claims,
**characterized in that**
the self-adhesive composition layers SK1 and/or SK2 are formed on the basis of vinylaromatic block copolymer and tackifying resin, preferably with selection to an extent of at least 75 wt% (based on the total resin content) of a resin having a DACP (diacetone alcohol cloud point) of greater than 0°C, preferably greater than 10°C, and a softening temperature (ring & ball) of not less than 70°C, preferably not less than 100°C.

**15.** Pressure-sensitive adhesive strip according to Claim 14,
**characterized in that**
the self-adhesive composition layer SK1 and/or SK2 includes 20% to 60 wt% of tackifying resin, based on the total weight of the self-adhesive composition layer, preferably 30% to 50 wt% of tackifying resin, based on the total weight of the self-adhesive composition layer.

**16.** Pressure-sensitive adhesive strip according to Claim 14 or 15,
**characterized in that**
the tackifying resin to an extent of at least 75 wt% is hydrocarbon resin or terpene resin or a mixture of the same.

**17.** Pressure-sensitive adhesive strip according to at least one of the preceding claims,
**characterized in that**
the proportion of the microballoons in the foamed self-adhesive composition layer SK1 and/or the foamed self-adhesive composition layer SK2 is up 12 wt%, preferably between 0.25 wt% and 5 wt%, more preferably between 0.5% and 4 wt%, even more preferably between 1 wt% and 3.5 wt%, especially 2.0% to 3.0 wt%, based in each case on the overall composition of the self-adhesive composition layer.

**18.** Pressure-sensitive adhesive strip according to at least one of the preceding claims,
**characterized in that**
the mean diameter of the voids formed by the microballoons in the foamed self-adhesive composition layers SK1 and/or SK2, preferably in both layers SK1 and SK2, is 60 to 100 $\mu$m, more preferably 70 to 90 $\mu$m, for example 80 $\mu$m.

**19.** Pressure-sensitive adhesive strip according to at least one of the preceding claims,
**characterized in that**
the self-adhesive composition layer SK1 and/or SK2 consists of the following composition:

| | |
|---|---|
| • vinylaromatic block copolymers | 20% to 75 wt% |
| • tackifying resins | 24.6% to 60 wt% |
| • microballoons | 0.2% to 10 wt% |
| • additives | 0.2% to 10 wt% |

**20.** Pressure-sensitive adhesive strip according to at least one of the preceding claims,
**characterized in that**
the self-adhesive composition layer SK1 and/or SK2 consists of the following composition:

| | |
|---|---|
| • vinylaromatic block copolymers | 35% to 65 wt% |
| • tackifying resins | 34.6% to 45 wt% |
| • microballoons | 0.2% to 10 wt% |
| • additives | 0.2% to 10 wt% |

**21.** Pressure-sensitive adhesive strip according to at least one of Claims 1 to 18,
**characterized in that**
the self-adhesive composition layer SK1 and/or SK2 consists of the following composition:

| | |
|---|---|
| • vinylaromatic block copolymers | 30% to 75 wt% |
| • tackifying resins | 24.8% to 60 wt% |

(continued)

| | |
|---|---|
| • microballoons | 0.2% to 10 wt% |

**22.** Pressure-sensitive adhesive strip according to at least one of the preceding claims, **characterized in that** the absolute density (determined by the method in the description) of the foamed self-adhesive composition layer SK1 and/or SK2 is 600 to 700 kg/m$^3$.

**23.** Pressure-sensitive adhesive strip according to any of Claims 4 to 22, **characterized in that** the film carrier is non-extensible.

**24.** Pressure-sensitive adhesive strip according to any of Claims 4 to 22, **characterized in that** the film carrier is extensible.

**25.** The use of a pressure-sensitive adhesive strip according to at least one of the preceding claims for bonding of components such as, in particular, accumulators and electronic devices such as, in particular, mobile devices, for example mobile phones.


**Revendications**

**1.** Bande autoadhésive qui comprend au moins une couche SK1, de préférence exactement une couche SK1, composée d'une masse autoadhésive qui est à base d'une masse de copolymère à blocs vinylaromatiques moussée avec des microballons, le diamètre moyen (déterminé d'après la méthode dans la description) des cavités formées par les microballons dans la couche de masse autoadhésive SK1 étant de 45 à 110 μm, **caractérisée en ce que** la densité absolue (déterminée d'après la méthode dans la description) de la couche de masse autoadhésive moussée SK1 est de 500 à 750 kg/m$^3$.

**2.** Bande autoadhésive selon la revendication 1, **caractérisée en ce que** la bande autoadhésive est constituée de la couche de masse autoadhésive SK1.

**3.** Bande autoadhésive selon la revendication 2, **caractérisée en ce que** la couche de masse autoadhésive SK1 présente une épaisseur de 45 à 5 000 μm, plus préférablement de 80 à 2 500 μm, encore plus préférablement de 100 μm à 2 000 μm, en particulier de 100 à 300 μm, comme par exemple 150 μm.

**4.** Bande autoadhésive selon la revendication 1, **caractérisée en ce que** la bande autoadhésive comprend une couche SK1 et en outre une couche F composée d'un support de feuille, la couche SK1 étant disposée sur l'une des surfaces de la couche de support de feuille F.

**5.** Bande autoadhésive selon la revendication 4, **caractérisée en ce que** la bande autoadhésive comprend en outre une couche SK2 composée d'une masse autoadhésive à base d'une masse de copolymère à blocs vinylaromatiques qui est disposée sur la surface de la couche de support de feuille F opposée à la couche SK1, la couche SK2 étant de préférence à base d'une masse moussée avec des microballons, le diamètre moyen des cavités formées par les microballons dans la couche SK2 étant notamment de 45 à 110 μm.

**6.** Bande autoadhésive selon la revendication 4 ou 5, **caractérisée en ce que** la couche de support de feuille présente une épaisseur comprise entre 5 et 125 μm, de préférence entre 10 et 60 μm, plus préférablement entre 10 et 50 μm, encore plus préférablement entre 10 et 40 μm, et la couche de masse autoadhésive SK1 et la couche de masse autoadhésive SK2, si elle est présente, présentent indépendamment l'une de l'autre une épaisseur comprise entre 45 et 1 000 μm, plus préférablement entre 45 et 200 μm et en particulier de 60 à 150 μm.

**7.** Bande autoadhésive selon l'une quelconque des revendications 5 et 6, **caractérisée en ce que** la bande autoadhésive présente une structure symétrique en ce qui concerne la composition des couches, par le fait que les masses de copolymère à blocs vinylaromatiques moussées des deux couches de masses autoadhésives SK1 et SK2 sont chimiquement identiques.

**8.** Bande autoadhésive selon l'une quelconque des revendications 5 à 7, **caractérisée en ce que** la bande autoadhésive présente une structure structurellement symétrique, par le fait que les deux couches de masses autoadhésives SK1 et SK2 présentent la même épaisseur et/ou la même densité.

**9.** Bande autoadhésive selon l'une quelconque des revendications précédentes, **caractérisée en ce qu'**en tant que couches de masses autoadhésives SK1 et/ou SK2, celles à base de copolymère à blocs vinylaromatiques contenant des blocs de polymère (i) majoritairement formés de composés vinylaromatiques (blocs A), préférablement de styrène, et en même temps (ii) ceux formés majoritairement par polymérisation de 1,3-diènes (blocs B), comme par exemple le butadiène et l'isoprène ou d'un copolymère des deux, sont utilisées.

**10.** Bande autoadhésive selon l'une quelconque des revendications précédentes, **caractérisée en ce qu'**en tant que copolymère à blocs vinylaromatiques, au moins un caoutchouc de synthèse sous forme d'un copolymère à blocs doté d'une structure A-B, A-B-A, $(A\text{-}B)_n$, $(A\text{-}B)_n X$ ou $(A\text{-}B\text{-}A)_n X$, est utilisé,
où

- les blocs A représentent indépendamment l'un de l'autre un polymère formé par polymérisation d'au moins un composé vinylaromatique,
- les blocs B représentent indépendamment l'un de l'autre un polymère formé par polymérisation de diènes conjugués comportant 4 à 18 atomes de C, ou représentent un dérivé partiellement hydrogéné d'un tel polymère,
- X représente un radical d'un réactif de couplage ou d'un initiateur et
- n représente un nombre entier $\geq 2$.

**11.** Bande autoadhésive selon la revendication 9 ou 10, **caractérisée** ce que les composés vinylaromatiques pour la structure du bloc A comprennent du styrène, de l'a-méthylstyrène et/ou d'autres dérivés de styrène, particulièrement préférablement du styrène.

**12.** Bande autoadhésive selon l'une quelconque des revendications 9 à 11, **caractérisée en ce que** le monomère pour le bloc B est choisi dans le groupe constitué par le butadiène, l'isoprène, l'éthylbutadiène, le phénylbutadiène, le pipérylène, le pentadiène, l'hexadiène, l'éthylhexadiène et le diméthylbutadiène ainsi qu'un mélange quelconque de ces monomères.

**13.** Bande autoadhésive selon l'une quelconque des revendications précédentes, **caractérisée en ce que** la proportion des copolymères à blocs vinylaromatiques, comme en particulier des copolymères à blocs de styrène, est, en somme par rapport à la couche de masse autoadhésive totale SK1 ou SK2, d'au moins 20 % en poids, de préférence d'au moins 30 % en poids, plus préférablement d'au moins 35 % en poids et en même temps de maximum 75 % en poids, préférablement de maximum 65 % en poids, tout particulièrement préférablement de maximum 55 % en poids.

**14.** Bande autoadhésive selon l'une quelconque des revendications précédentes, **caractérisée en ce que** les couches de masses autoadhésives SK1 et/ou SK2 sont construites à base de copolymère à blocs vinylaromatiques et de résine adhésive, de préférence une résine étant choisie, à hauteur d'au moins 75 % en poids (par rapport à la proportion totale de résine) comportant un DACP (diacetone alcohol cloud point - point de trouble de l'alcool diacétonique) supérieur à 0 °C, préférablement supérieur à 10 °C, et une température de ramollissement (anneau & bille) supérieure ou égale à 70 °C, de préférence supérieure ou égale à 100 °C.

**15.** Bande autoadhésive selon la revendication 14, **caractérisée en ce que** 20 à 60 % en poids de résine adhésive, par rapport au poids total de la couche de masse autoadhésive, préférablement 30 à 50 % en poids de résine adhésive, par rapport au poids total de la couche de masse autoadhésive, sont contenus dans la couche de masse autoadhésive SK1 et/ou SK2.

**16.** Bande autoadhésive selon la revendication 14 ou 15, **caractérisée en ce que** la résine adhésive est, à hauteur d'au moins 75 % en poids, une résine d'hydrocarbure ou une résine terpénique ou un mélange de celles-ci.

**17.** Bande autoadhésive selon au moins l'une des revendications précédentes, **caractérisée en ce que** la proportion des microballons dans la couche de masse autoadhésive SK1 moussée et/ou la couche de masse autoadhésive SK2 moussée est de jusqu'à 12 % en poids, de préférence entre 0,25 % en poids et 5 % en poids, plus préférablement entre 0,5 et 4 % en poids, encore plus préférablement entre 1 et 3,5 % en poids, en particulier 2,0 à 3,0 % en poids, à chaque fois par rapport à la composition totale de la couche de masse autoadhésive.

18. Bande autoadhésive selon au moins l'une des revendications précédentes, **caractérisée en ce que** le diamètre moyen des cavités formées par les microballons dans les couches de masse autoadhésive moussées SK1 et/ou SK2, de préférence dans les deux couches SK1 et SK2, est de 60 à 100 $\mu$m, plus préférablement de 70 à 90 $\mu$m, comme par exemple 80 $\mu$m.

19. Bande autoadhésive selon au moins l'une des revendications précédentes, **caractérisée en ce que** la couche de masse autoadhésive SK1 et/ou SK2 est constituée de la composition suivante :

   • copolymères à blocs vinylaromatiques 20 à 75 % en poids
   • résines adhésives 24,6 à 60 % en poids
   • microballons 0,2 à 10 % en poids
   • additifs 0,2 à 10 % en poids.

20. Bande autoadhésive selon au moins l'une des revendications précédentes, **caractérisée en ce que** la couche de masse autoadhésive SK1 et/ou SK2 est constituée de la composition suivante :

   • copolymères à blocs vinylaromatiques 35 à 65 % en poids
   • résines adhésives 34,6 à 45 % en poids
   • microballons 0,2 à 10 % en poids
   • additifs 0,2 à 10 % en poids.

21. Bande autoadhésive selon au moins l'une des revendications 1 à 18, **caractérisée en ce que** la couche de masse autoadhésive SK1 et/ou SK2 est constituée de la composition suivante :

   • copolymères à blocs vinylaromatiques 30 à 75 % en poids
   • résines adhésives 24,8 à 60 % en poids
   • microballons 0,2 à 10 % en poids.

22. Bande autoadhésive selon au moins l'une des revendications précédentes, **caractérisée en ce que** la densité absolue (déterminée par la méthode dans la description) de la couche de masse autoadhésive moussée SK1 et/ou SK2 est de 600 à 700 kg/m$^3$.

23. Bande autoadhésive selon l'une quelconque des revendications 4 à 22, **caractérisée en ce que** le support de feuille n'est pas étirable.

24. Bande autoadhésive selon l'une quelconque des revendications 4 à 22, **caractérisée en ce que** le support de feuille est étirable.

25. Utilisation d'une bande autoadhésive selon au moins l'une des revendications précédentes pour le collage de pièces comme en particulier des piles et des appareils électroniques comme en particulier des appareils mobiles, comme par exemple des téléphones mobiles.

Fig. 1

Fig. 2

Fig. 3

Fig. 4

# Fig. 5

**IN DER BESCHREIBUNG AUFGEFÜHRTE DOKUMENTE**

**In der Beschreibung aufgeführte Patentdokumente**

- EP 2832780 A1
- JP 2010070655 A
- DE 102008056980 A1
- WO 2009090119 A1
- WO 2003011954 A1
- DE 102015206076 A1
- DE 102016202479
- DE 102016209707
- WO 2011124782 A1
- DE 102012223670 A1
- WO 2009114683 A1
- WO 2010077541 A1
- WO 2010078396 A1
- EP 0894841 B1
- EP 1308492 B1

**In der Beschreibung aufgeführte Nicht-Patentliteratur**

- Polymer Handbook. Wiley, 1999
- Taschenbuch der Physik. Verlag Harri Deutsch, 1994, 102-110